# EUROPEAN PATENT APPLICATION

(11) **EP 4 842 119 A1**
(43) Date of publication of application: **18.11.2026**
(21) Application number: 24921800.9
(22) Date of filing: 25.12.2024
(51) Int. Cl.: H04W 72/23, H04W 36/00

(54) **COMMUNICATION METHOD, APPARATUS AND SYSTEM**

(30) Priority: 31.01.2024 CN 202410153009
(71) Applicant: Huawei Technologies Co., Ltd., Shenzhen, Guangdong 518129 (CN)
(72) Inventor: PAN, Xiaodan, Shenzhen, Guangdong 518129 (CN); PENG, Wenjie, Shenzhen, Guangdong 518129 (CN)
(74) Representative: Huawei European IPR
(86) International application number: PCT/CN2024/142057
(87) International publication number: WO 2025/161778

(57) **Abstract**

This application relates to the field of communication technologies, and provides a communication method, apparatus, and system. The method includes: A first network device sends first information to a terminal device, where the first information includes first configuration information and first indication information, the first information indicates to add a second network device, the first indication information indicates that a first radio bearer is further associated with a first functional unit, the first functional unit is configured to process data corresponding to the first network device, and a second functional unit is configured to process data corresponding to the second network device. During the process of adding a secondary node, the terminal device may retain the original functional unit without releasing it, and configure a new functional unit. Both the original functional unit and the new functional unit can perform data transmission, thereby maintaining data transmission over a radio bearer and avoiding a rate decrease during re-establishment of protocol entities by the terminal device.

## Description

This application claims priority to Chinese Patent Application No. 202410153009.X, filed with the China National Intellectual Property Administration on January 31, 2024 and entitled "COMMUNICATION METHOD, APPARATUS, AND SYSTEM", which is incorporated herein by reference in its entirety.

### TECHNICAL FIELD

This application relates to the field of communication technologies, and more specifically, to a communication method, apparatus, and system.

### BACKGROUND

On the network side, a terminal device may be configured to add a secondary node, thereby implementing dual connectivity between the terminal device and the network side. A master node and the secondary node jointly provide services for the terminal device. During the process of adding the secondary node, protocol entities corresponding to some radio bearers may be reconfigured from the master node to the secondary node. The terminal device needs to re-establish these protocol entities and adjust underlying transmission resources, resulting in a decrease in data transmission rates of the radio bearers.

Therefore, how to avoid a rate decrease during the re-establishment of protocol entities by the terminal device is an urgent problem to be resolved.

### SUMMARY

This application provides a communication method, apparatus, and system, to avoid a rate decrease during re-establishment of protocol entities by a terminal device.

According to a first aspect, a communication method is provided. The method may be performed by a first network device, may be performed by a component (for example, a processor, a chip, or a chip system) in the first network device, or may be performed by a logical module or software that can implement all or some functions of the first network device.

The method includes: receiving first configuration information from a second network device, where the first configuration information is used to configure a second functional unit associated with a first radio bearer, and the first network device and the second network device provide a service for a terminal device; and sending first information to the terminal device, where the first information includes the first configuration information and first indication information, the first information indicates to add the second network device, the first indication information indicates that the first radio bearer is further associated with a first functional unit, the first functional unit is configured to process data corresponding to the first network device, and the second functional unit is configured to process data corresponding to the second network device.

According to the foregoing embodiment, during the process of adding a secondary node, the terminal device may retain an original functional unit without releasing it, and configure a new functional unit. Both the original functional unit and the new functional unit can perform data transmission, thereby maintaining data transmission over a radio bearer and avoiding a rate decrease during re-establishment of protocol entities by the terminal device. In this way, user experience is improved.

In some implementations, the method further includes: receiving second information, where the second information indicates that the terminal device has successfully added the second network device; and stopping sending data of the first radio bearer to the terminal device.

According to the foregoing embodiment, when determining that the terminal device adds the second network device, the first network device may stop sending the data of the first radio bearer to the terminal device. Because the terminal device has successfully added the second network device, the second network device may perform downlink transmission over the first radio bearer with the terminal device. In the foregoing embodiment, the terminal device maintains the downlink transmission in the protocol entity re-establishment process, thereby avoiding the rate decrease.

In some implementations, the method further includes: sending the data of the first radio bearer to the second network device.

According to the foregoing embodiment, the first network device may deliver the data of the first radio bearer to the second network device, so that the second network device can perform uplink and downlink data transmission, thereby improving continuity of the data transmission.

In some implementations, the method further includes: sending third information to the terminal device, where the third information indicates the terminal device to release the first functional unit.

In some implementations, the method further includes: receiving fourth information, where the fourth information indicates at least one of the following: modification of a protocol data unit session is completed, the terminal device has delivered all data of the first functional unit, or the terminal device requests to release the first functional unit.

In some implementations, the sending the third information to the terminal device includes: sending the third information to the terminal device in response to the fourth information.

In some implementations, the method further includes: sending fifth information to the second network device, where the fifth information indicates the second network device to configure the first radio bearer to be associated with the first functional unit and the second functional unit.

In some implementations, the method further includes: receiving sixth information from the second network device, where the sixth information indicates that the second network device determines to configure the first radio bearer to be associated with the first functional unit and the second functional unit.

In some implementations, the method further includes: receiving second indication information from the second network device, where the second indication information indicates the first network device to configure the first radio bearer to be associated with the first functional unit and the second functional unit.

In some implementations, the first information further includes third indication information, and the third indication information indicates that the first configuration information is preconfiguration information.

In some implementations, the first configuration information corresponds to information about the second network device, and the method further includes: sending seventh information to the terminal device, where the seventh information is used to activate a configuration of the first configuration information, and the seventh information includes the information about the second network device.

In some implementations, the method further includes: sending fourth indication information to the second network device, where the fourth indication information indicates that the terminal device is to add the second network device based on the first configuration information.

In some implementations, the method further includes: receiving a first message from the terminal device, where the first message indicates that the terminal device has successfully added the second network device, the first message includes fifth indication information, and the fifth indication information indicates that the terminal device completes a configuration corresponding to the second network device.

In some implementations, the method further includes: sending the fifth indication information to the second network device.

In some implementations, the method further includes: sending eighth information to a core network element, where the eighth information indicates to activate a preconfigured tunnel corresponding to the second network device, and the preconfigured tunnel corresponding to the second network device is associated with the data of the first radio bearer.

In some implementations, the method further includes: sending ninth information to the core network element, where the ninth information indicates to release a preconfigured tunnel corresponding to a network device other than the second network device.

In some implementations, the method further includes: activating the preconfigured tunnel between the first network device and the second network device.

In some implementations, the fifth information is used to request the second network device to preconfigure the first radio bearer to be associated with the first functional unit and the second functional unit.

In some implementations, the first configuration information includes the first indication information.

According to a second aspect, a communication method is provided. The method may be performed by a terminal device, may be performed by a component (for example, a processor, a chip, or a chip system) in the terminal device, or may be performed by a logical module or software that can implement all or some functions of the terminal device.

The method includes: receiving first information from a first network device, where the first information includes first configuration information and first indication information, the first configuration information is used to configure a second functional unit associated with a first radio bearer, the first information indicates to add a second network device, the first indication information indicates that the first radio bearer is further associated with a first functional unit, the first functional unit is configured to process data corresponding to the first network device, the second functional unit is configured to process data corresponding to the second network device, and the first network device and the second network device provide a service for the terminal device; and establishing the second functional unit based on the first information, and adding the second network device.

In some implementations, the method further includes: sending second information to the second network device, where the second information indicates that the terminal device has successfully added the second network device.

In some implementations, the method further includes: receiving third information from the first network device, where the third information indicates the terminal device to release the first functional unit; and releasing the first functional unit based on the third information.

In some implementations, the method further includes: sending fourth information to the first network device, where the fourth information indicates at least one of the following: The terminal device has delivered all data of the first functional unit, or the terminal device requests to release the first functional unit.

In some implementations, the method further includes: establishing a second bearer and a third bearer based on the first information, where the second functional unit is configured to process data corresponding to the second bearer and the third bearer, the first functional unit is configured to process data corresponding to a first bearer, the first bearer and the second bearer correspond to the first network device, and the third bearer corresponds to the second network device.

In some implementations, the first information further includes third indication information, where the third indication information indicates that the first configuration information is preconfiguration information, and the first indication information is carried in the first configuration information.

In some implementations, the first configuration information corresponds to information about the second network device; and the method further includes: receiving seventh information from the first network device, where the seventh information includes the information about the second network device. The establishing the second functional unit based on the first information includes: establishing the second functional unit based on the seventh information and the first configuration information, and adding the second network device.

According to a third aspect, a communication method is provided. The method may be performed by a second network device, may be performed by a component (for example, a processor, a chip, or a chip system) in the second network device, or may be performed by a logical module or software that can implement all or some functions of the second network device.

The method includes: sending first configuration information to a first network device, where the first configuration information is used to configure, for a terminal device, a second functional unit associated with a first radio bearer, and the second functional unit is configured to process data corresponding to the second network device; and sending second indication information to the first network device, where the second indication information indicates that the first radio bearer is further associated with a first functional unit, the first functional unit is configured to process data corresponding to the first network device, and the first network device and the second network device provide a service for the terminal device.

In some implementations, the method further includes: sending second information to the first network device, where the second information indicates that the terminal device has successfully added the second network device.

In some implementations, the method further includes: receiving data of the first radio bearer from the first network device.

In some implementations, the method further includes: receiving fifth information from the first network device, where the fifth information indicates the second network device to configure the first radio bearer to be associated with the first functional unit and the second functional unit.

In some implementations, the method further includes: sending sixth information to the first network device, where the sixth information indicates that the second network device determines to configure the first radio bearer to be associated with the first functional unit and the second functional unit.

In some implementations, the method further includes: sending the second indication information to the first network device, where the second indication information indicates the first network device to configure the first radio bearer to be associated with the first functional unit and the second functional unit.

In some implementations, the method further includes: receiving fourth indication information from the first network device, where the fourth indication information indicates that the terminal device is to add the second network device based on the first configuration information.

In some implementations, the method further includes: receiving fifth indication information from the first network device, where the fifth indication information indicates that the terminal device completes a configuration corresponding to the second network device.

In some implementations, the fifth information is used to request the second network device to preconfigure the first radio bearer to be associated with the first functional unit and the second functional unit.

In some implementations, the method further includes: sending eighth information to a core network element, where the eighth information indicates to activate a preconfigured tunnel corresponding to the second network device.

In some implementations, the method further includes: activating the preconfigured tunnel between the second network device and the first network device.

According to a fourth aspect, a communication apparatus is provided, including a processing circuit (which may also be referred to as a processor) and an input/output interface (which may also be referred to as an interface circuit). The input/output interface is configured to input and/or output a signal; and the processing circuit is configured to perform the method according to any one of the first aspect and the possible implementations of the first aspect, the processing circuit is configured to perform the method according to any one of the second aspect and the possible implementations of the second aspect, or the processing circuit is configured to perform the method according to any one of the third aspect and the possible implementations of the third aspect.

In some implementations, the processor is configured to: communicate with another apparatus through the interface circuit; and perform the method according to any one of the first aspect and the possible implementations of the first aspect, perform the method according to any one of the second aspect and the possible implementations of the second aspect, or perform the method according to any one of the third aspect and the possible implementations of the third aspect. There are one or more processors.

According to a fifth aspect, a communication apparatus is provided. The communication apparatus may include a device, a module, or the like configured to perform a function of the communication apparatus.

In some implementations, the communication apparatus may include modules or units that are in one-to-one correspondence with the methods/operations/steps/actions described in any one of the first aspect and the possible implementations of the first aspect. The modules or units may be implemented by a hardware circuit, software, or a combination of the hardware circuit and the software.

In some implementations, the communication apparatus may include modules or units that are in one-to-one correspondence with the methods/operations/steps/actions described in any one of the second aspect and the possible implementations of the second aspect. The modules or units may be implemented by a hardware circuit, software, or a combination of the hardware circuit and the software.

In some implementations, the communication apparatus may include modules or units that are in one-to-one correspondence with the methods/operations/steps/actions described in any one of the third aspect and the possible implementations of the third aspect. The modules or units may be implemented by a hardware circuit, software, or a combination of the hardware circuit and the software.

According to a sixth aspect, a computer-readable storage medium is provided. The computer-readable storage medium stores a computer program or instructions. When the computer program or the instructions are run on a computer, the method according to any one of the first aspect and the possible implementations of the first aspect is performed, the method according to any one of the second aspect and the possible implementations of the second aspect is performed, or the method according to any one of the third aspect and the possible implementations of the third aspect is performed.

According to a seventh aspect, a computer program product is provided, including a computer program or instructions. When the computer program or the instructions are run on a computer, the method according to any one of the first aspect and the possible implementations of the first aspect is performed, the method according to any one of the second aspect and the possible implementations of the second aspect is performed, or the method according to any one of the third aspect and the possible implementations of the third aspect is performed.

According to an eighth aspect, a communication apparatus is provided, including a processor, and configured to: connect to a memory, and invoke a program stored in the memory, to perform any possible method according to the first aspect, perform any possible method according to the second aspect, or perform any possible method according to the third aspect. The memory may be located inside or outside the communication apparatus. In addition, there are one or more processors.

In an implementation, the communication apparatus according to the third aspect, the fourth aspect, the fifth aspect, or the eighth aspect may be a chip or a chip system.

According to a ninth aspect, a chip is provided, including a processor, and configured to invoke a computer program or computer instructions in a memory, to cause the processor to perform any one of the implementations of the first aspect, cause the processor to perform any one of the implementations of the second aspect, or cause the processor to perform any one of the implementations of the third aspect.

In some implementations, the processor is coupled to the memory through an interface.

According to a tenth aspect, a communication system is provided, including a terminal device, a first network device, and a second network device, where the first network device is configured to perform any one of the first aspect and the possible implementations of the first aspect, the terminal device is configured to perform any one of the second aspect and the possible implementations of the second aspect, and the second network device is configured to perform any one of the third aspect and the possible implementations of the third aspect.

For descriptions of beneficial effects of any one of the second aspect to the tenth aspect, refer to the descriptions of the beneficial effects of the first aspect.

### BRIEF DESCRIPTION OF DRAWINGS

FIG. 1 is a diagram of a possible architecture of a communication system applicable to an embodiment of this application;
FIG. 2a to FIG. 2d are diagrams of some possible architectures of a communication system applicable to an embodiment of this application;
FIG. 3 is a schematic flowchart of a method for secondary node addition;
FIG. 4 is a schematic flowchart of a communication method according to an embodiment of this application;
FIG. 5a and FIG. 5b are diagrams of protocol stack configurations according to an embodiment of this application;
FIG. 6 is a schematic flowchart of another communication method according to an embodiment of this application;
FIG. 7 is a schematic flowchart of still another communication method according to an embodiment of this application;
FIG. 8 is a block diagram of a communication apparatus according to an embodiment of this application; and
FIG. 9 is a block diagram of another communication apparatus according to an embodiment of this application.

### DESCRIPTION OF EMBODIMENTS

The following describes technical solutions of this application with reference to accompanying drawings.

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In addition, in embodiments of this application, terms such as "example" and "for example" are used for representing giving an example, an illustration, or descriptions. Any embodiment or design scheme described as an "example" in this application should not be explained as being more preferred or having more advantages than another embodiment or design scheme. Exactly, the term "example" is for presenting a concept in a specific manner.

A service scenario described in embodiments of this application is intended to describe the technical solutions in embodiments of this application more clearly, but does not constitute a limitation on the technical solutions provided in embodiments of this application. A person of ordinary skill in the art may learn that as a new service scenario emerges, the technical solutions provided in embodiments of this application are also applicable to a similar technical problem.

Reference to "an embodiment", "some embodiments", or the like described in the specification indicates that one or more embodiments of this application include a specific feature, structure, or characteristic described with reference to embodiments. Therefore, statements "in an embodiment", "in some embodiments", "in some other embodiments", "in some additional embodiments", and the like described in different parts in this specification do not necessarily refer to a same embodiment, but mean "one or more but not all embodiments", unless otherwise specifically emphasized in other manners. Terms "include", "comprise", "have", and their variants all mean "include but are not limited to", unless otherwise specifically emphasized in another manner.

The technical solutions in embodiments of this application may be applied to various communication systems, including but not limited to: a global system for mobile communications (global system for mobile communications, GSM), an enhanced data rates for GSM evolution (enhanced data rates for GSM evolution, EDGE) system, a wideband code division multiple access (wideband code division multiple access, WCDMA) system, a code division multiple access 2000 (code division multiple access, CDMA2000) system, a time division-synchronous code division multiple access (time division-synchronization code division multiple access, TD-SCDMA) system, a long term evolution (long term evolution, LTE) system, an LTE frequency division duplex (frequency division duplex, FDD) system, LTE time division duplex (time division duplex, TDD), a worldwide interoperability for microwave access (worldwide interoperability for microwave access, WiMAX) communication system, a 5th generation (5^{th} generation, 5G) mobile communication system or a new radio (new radio, NR) system, a narrowband internet of things (narrowband internet of things, NB-IoT) system, an enhanced machine-type communication (enhanced machine-type communication, eMTC) system, an enhanced mobile broadband (enhanced mobile broadband, eMBB) system, an ultra-reliable low-latency communication (ultra-reliable low-latency communication, URLLC) system, a satellite communication system or an LTE-machine-to-machine (LTE-machine-to-machine, LTE-M) system, a future 6th generation (6^{th} generation, 6G) mobile communication system, and the like.

It should be noted that, in embodiments of this application, the term "communication" may also be described as "data transmission", "signal transmission", "information transmission", "transmission", or the like. In embodiments of this application, the transmission may include sending or receiving. For example, the transmission may be uplink transmission. For example, a terminal device may send a signal to a network device. The transmission may alternatively be downlink transmission. For example, a network device may send a signal to a terminal device.

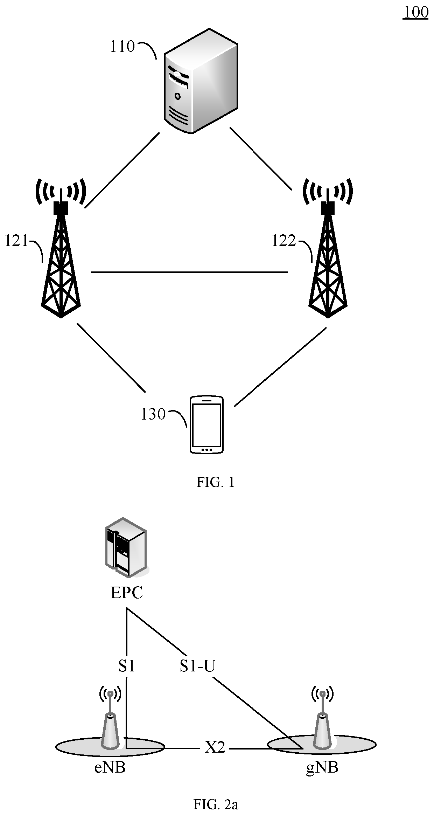

FIG. 1 is a diagram of a possible architecture of a communication system applicable to an embodiment of this application. As shown in FIG. 1, a terminal device 130 may establish connections to two network devices (which are a network device 121 and a network device 122 respectively), and perform uplink (uplink, UL) or downlink (downlink, DL) service transmission with a core network 110. The core network may be a 4G, 5G, or 6G core network. This is not limited in this application.

The network device 121 (or the network device 122) may be any device having a wireless transceiver function, for example, a base station configured to connect the terminal device 130 to a radio access network (radio access network, RAN). The base station may sometimes be referred to as an access network device or an access network node. It may be understood that in systems using different radio access technologies, names of devices having functions of the base station may be different. For ease of description, in this embodiment of this application, apparatuses that provide a wireless communication access function for the terminal device are collectively referred to as a base station. In this embodiment of this application, the network device 121 (or the network device 122) includes but is not limited to a macro base station, a micro base station, a pico base station, a small cell, a balloon station, a relay station, an access point, and the like in various forms. The network device 110 may include an evolved NodeB (evolved NodeB, eNB, or eNodeB) in LTE, a next generation-evolved NodeB (next generation-evolved NodeB, ng-eNB), a radio network controller (radio network controller, RNC), a NodeB (NodeB, NB), a base station controller (base station controller, BSC), a base transceiver station (base transceiver station, BTS), a home evolved NodeB (home evolved NodeB or home NodeB, HNB), a baseband unit (baseband unit, BBU), an access point, a radio relay node, a radio backhaul node in a wireless fidelity (wireless fidelity, Wi-Fi) system, a transmission point (transmission point, TP), a transmission reception point (transmission reception point, TRP), or the like, may further include a next generation node base station (next generation node base station, gNB) in a 5G system, an NR gNB or a transmission point (TRP or TP), one or a group of antenna panels (including a plurality of antenna panels) of a base station in a 5G system, and a network node that forms a gNB or a transmission point, like a baseband unit (BBU) or a distributed unit (distributed unit, DU), and may further include a network device, a server, a wearable device, a vehicle-mounted device, or the like in a future 6G network.

The network device 121 (or the network device 122) may include a baseband unit (baseband unit, BBU) and a remote radio unit (remote radio unit, RRU). The BBU and the RRU may be placed in different places. For example, the RRU may be remote and placed in a heavy-traffic area, and the BBU is placed in a central equipment room. The BBU and the RRU may also be placed in a same place, for example, in a same equipment room. Alternatively, the BBU and the RRU may be different components in a rack.

The network device 121 (or the network device 122) may further support an open RAN architecture. For example, the network device 121 (or the network device 122) may include a RAN device of a central unit (central unit, CU) node or a distributed unit (distributed unit, DU) node.

In this embodiment of this application, an apparatus configured to implement a function of the network device 121 (or the network device 122) may be the network device 121 (or the network device 122), or may be an apparatus that can support the network device 121 (or the network device 122) in implementing the function, for example, a chip system. The apparatus may be mounted in the network device 121 (or the network device 122). The chip system may include a chip, or may include a chip and another discrete device.

The terminal device 130 may be a device that provides voice and/or data connectivity for a user. The terminal device 130 may be deployed on land, including an indoor device, an outdoor device, a handheld device, or a vehicle-mounted device; may be deployed on water (for example, on a ship); or may be deployed in the air (for example, on an uncrewed aerial vehicle, an aircraft, a balloon, or a satellite). The terminal device 130 may also be referred to as a user equipment (user equipment, UE), a mobile terminal (mobile terminal, MT), an access terminal, a terminal, a subscriber unit (subscriber unit), a subscriber station, a mobile station (mobile station, MS), a remote station, a remote terminal, a mobile device, a user terminal, a wireless network device, a user agent, or a user apparatus. In this embodiment of this application, the terminal device 130 includes but is not limited to: a cellular phone (cellular phone), a mobile phone (mobile phone), a wireless data card, a wireless modem (modem), a tablet computer (pad), a laptop computer (laptop computer), a computer with a wireless transceiver function, a cordless phone, a session initiation protocol (session initiation protocol, SIP) phone, a smartphone (smartphone), a wireless local loop (wireless local loop, WLL) station, a personal digital assistant (personal digital assistant, PDA), a handheld device (handset) with a wireless communication function, a compute device or another device connected to a wireless modem, a vehicle-mounted device, a wearable device, an uncrewed aerial vehicle device, a terminal device in an internet of things or an internet of vehicles, a terminal in any form in a future network, a relay user equipment, a terminal in a future evolved public land mobile network (public land mobile network, PLMN), or the like. Alternatively, the terminal device 130 may be a VR terminal device, an AR terminal device, a machine type communication (machine type communication, MTC) terminal, a terminal device in industrial control (industrial control), a terminal device in self driving (self driving), a terminal device in remote medical (remote medical), a terminal device in a smart grid (smart grid), a wireless terminal in transportation safety (transportation safety), a terminal device in a smart city (smart city), a terminal device in a smart home (smart home), a haptic terminal device, a vehicle-mounted terminal device, a wearable terminal device, or the like. This is not limited in this embodiment of this application.

In this embodiment of this application, an apparatus configured to implement a function of the terminal device 130 may be the terminal device 130, or may be an apparatus that can support the terminal device 130 in implementing the function, for example, a chip system. The apparatus may be mounted in the terminal device 130. The chip system may include a chip, or may include a chip and another discrete device. In the technical solutions in embodiments of this application, an apparatus configured to implement a function of a terminal device is the terminal device, which may also be referred to as a terminal (terminal). The following may describe the technical solutions provided in embodiments of this application by using an example in which the terminal device is a UE.

The core network 110 may provide a user connection, manage a user, and complete service carrying. The core network 110 may be used as a bearer network to provide an interface to an external network. For example, the core network 110 may be a 4G, 5G, or 6G core network. The core network 110 may include one or more core network elements.

It should be understood that FIG. 1 is merely a simplified diagram of an example for ease of understanding. The communication system 100 may further include another network device or another terminal device, which is not shown in FIG. 1.

The network device 121 (or the network device 122) may communicate with the terminal device 130 over a radio link. A transmission link from the network device 121 (or the network device 122) to the terminal device 130 may be referred to as a downlink (downlink, DL) or a downlink channel, and is used to transmit a downlink signal. A transmission link from the terminal device 130 to the network device 121 (or the network device 122) may be referred to as an uplink (uplink, UL) or an uplink channel, and is used to transmit an uplink signal. For example, the network device 121 (or the network device 122) may send a downlink reference signal, for example, a cell-specific reference signal (cell-specific reference signal, CRS) or a UE-specific reference signal (UE-specific reference signal), to the terminal device 130 through the downlink channel, to perform channel state information measurement, data demodulation, beam training, time-frequency parameter tracking, and the like. The terminal device 130 may send an uplink reference signal, for example, an SRS or a DMRS, to the network device 121 (or the network device 122) through the uplink channel, to perform uplink and downlink channel measurement, data demodulation, and the like. Further, downlink data transmission may be performed through the downlink channel, and uplink data transmission may be performed through the uplink channel between the network device 121 (or the network device 122) and the terminal device 130.

Wireless communication may also be performed between the network device 121 and the network device 122, and wireless communication may also be performed between the terminal device 130 and another terminal device.

The scenario shown in FIG. 1 may also be referred to as dual connectivity (dual connectivity, DC). The DC is an operation mode of the terminal device 130 in a radio resource control (radio resource control, RRC) connected state. A scenario in which a network side (including the network device 121 and the network device 122) configures a master cell group (master cell group, MCG) and a secondary cell group (secondary cell group, SCG) for the terminal device 130 that is in the connected state may be referred to as DC.

FIG. 2a to FIG. 2d are diagrams of some possible architectures of a communication system applicable to an embodiment of this application. There are a plurality of DC scenarios. The following briefly describes four scenarios with reference to FIG. 2a to FIG. 2d. However, this application is not limited to the scenarios shown in FIG. 2a to FIG. 2d, and is further applicable to another dual-connectivity scenario.

Refer to FIG. 2a. The core network 110 may be an evolved packet core (evolved packet core, EPC), that is, a 4G core network. The network device 121 may be a long term evolution (long term evolution, LTE) base station, for example, an eNB. The network device 122 may be a new radio (new radio, NR) base station, for example, a gNB. LTE may serve as a master node (master node, MN), and the NR base station may serve as a secondary node (secondary node, SN). The foregoing scenario may also be referred to as 4G radio access network and 5G NR dual connectivity (E-UTRA-NR dual connectivity, EN-DC). There may be an X2 interface between the LTE base station and the NR base station. Through the X2 interface, at least a control plane connection exists between the LTE base station and the NR base station, and a user plane connection may also exist therebetween. There may be an S1 interface between the LTE base station and the EPC. Through the S1 interface, at least a control plane connection exists between the LTE base station and the EPC, and a user plane connection may also exist therebetween. There may be an S1-U interface between the NR base station and the EPC. That is, there may be a user plane connection. The LTE base station may provide an air interface resource for the terminal device 130 by using at least one LTE cell. In this case, the at least one LTE cell is referred to as an MCG. Correspondingly, the NR base station may also provide an air interface resource for the terminal device 130 by using at least one NR cell. In this case, the at least one NR cell is referred to as an SCG.

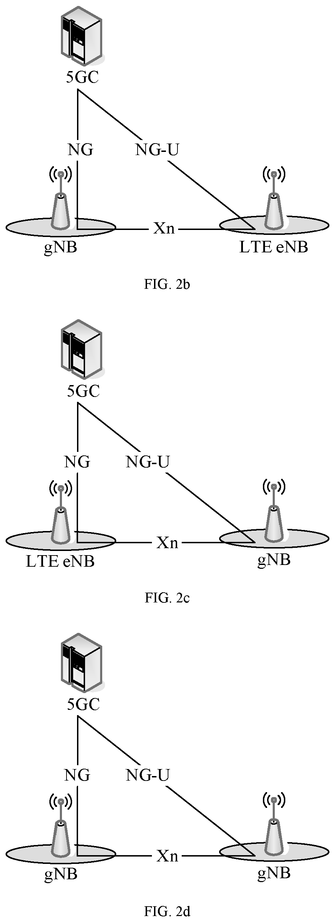

Refer to FIG. 2b. The core network 110 may be a 5G core network (5G core network, 5GC). The network device 121 may be an NR base station, for example, a gNB. The network device 122 may be an LTE base station, for example, an eNB. LTE may serve as a master node (master node, MN), and the NR base station may serve as a secondary node (secondary node, SN); or the NR base station may serve as an MN, and the LTE base station may serve as an SN. There may be an Xn interface between the NR base station and the LTE base station. Through the Xn interface, at least a control plane connection exists between the NR base station and the LTE base station, and a user plane connection may also exist therebetween. There may be an NG interface between the NR base station and the 5GC. Through the NG interface, at least a control plane connection exists between the NR base station and the 5GC, and a user plane connection may also exist therebetween. There may be an NG-U interface between the LTE base station and the 5GC. That is, there may be a user plane connection. The NR base station may provide an air interface resource for the terminal device 130 by using at least one NR cell. In this case, the at least one NR cell is referred to as an MCG. Correspondingly, the LTE base station may also provide an air interface resource for the terminal device 130 by using at least one LTE cell. In this case, the at least one LTE cell is referred to as an SCG.

Refer to FIG. 2c. The core network 110 may be a 5GC. The network device 121 may be an LTE base station, for example, an eNB. The network device 122 may be an NR base station, for example, a gNB. The LTE base station may serve as an MN, and the NR base station may serve as an SN. There may be an Xn interface between the LTE base station and the NR base station. Through the Xn interface, at least a control plane connection exists between the LTE base station and the NR base station, and a user plane connection may also exist therebetween. There may be an NG interface between the LTE base station and the 5GC. Through the NG interface, at least a control plane connection exists between the LTE base station and the 5GC, and a user plane connection may also exist therebetween. There may be an NG-U interface between the NR base station and the 5GC. That is, there may be a user plane connection. The LTE base station may provide an air interface resource for the terminal device 130 by using at least one LTE cell. In this case, the at least one LTE cell is referred to as an MCG. Correspondingly, the NR base station may also provide an air interface resource for the terminal device 130 by using at least one NR cell. In this case, the at least one NR cell is referred to as an SCG.

Refer to FIG. 2d. The core network 110 may be a 5GC. Both the network device 121 and the network device 122 may be NR base stations, for example, gNBs. One NR base station serves as an MN, and the other NR base station serves as an SN. There may be an Xn interface between the MN and the SN. Through the Xn interface, at least a control plane connection exists between the MN and the SN, and a user plane connection may also exist therebetween. There may be an NG interface between the MN and the 5GC. Through the NG interface, at least a control plane connection exists between the MN and the 5GC, and a user plane connection may also exist therebetween. There may be an NG-U interface between the SN and the 5GC. That is, there may be a user plane connection. The MN may provide an air interface resource for the terminal device 130 by using at least one NR cell. In this case, the at least one NR cell is referred to as an MCG. Correspondingly, the SN may also provide an air interface resource for the terminal device 130 by using at least one NR cell. In this case, the at least one NR cell is referred to as an SCG.

The communication system shown in FIG. 1 or FIG. 2a to FIG. 2d may also be referred to as a multi-radio access technology dual connectivity (multi-radio access technology dual connectivity, MR-DC) architecture. The MR-DC architecture may support a plurality of types of radio bearers (radio bearers, RBs). It should be noted that FIG. 1 and FIG. 2a to FIG. 2d are merely examples. An application scenario of this application is not limited to the dual connectivity scenario, and may be further applied to another scenario.

The radio bearer may be a general term of a series of protocol entities and configurations allocated by a network device to a terminal device, and may be a service that is provided by a layer 2 (layer 2) and that is used to perform user data transmission between the terminal device and the network device. The radio bearer may include one or more of a series of resources allocated for a packet data convergence protocol (packet data convergence protocol, PDCP) entity, a radio link control (radio link control, RLC) protocol entity, a media access control (media access control, MAC) protocol entity, and a physical layer (physical layer, PHY). The radio bearer may include a data radio bearer (data radio bearer, DRB) and a signaling radio bearer (signaling radio bearer, SRB). The DRB may be used to carry data, and the SRB may be used to carry a signaling message. In an example, a radio bearer configuration usually includes configurations of a PDCP layer and an SDAP layer. A protocol entity below an RLC layer is referred to as an RLC bearer, and a corresponding configuration is provided in an RLC bearer configuration. In other words, the radio bearer configuration may include the configurations of the PDCP layer and the SDAP layer, but does not include the configuration of the RLC bearer. In some other optional manners, the radio bearer configuration may include the configurations of the PDCP layer, the SDAP layer, and the RLC layer.

For example, a type of the radio bearer supported by the MR-DC architecture may include at least one of an MN terminated MCG bearer (MN terminated MCG bearer), an MN terminated SCG bearer (MN terminated SCG bearer), an MN terminated split bearer (MN terminated split bearer), an SN terminated MCG bearer (SN terminated MCG bearer), an SN terminated SCG bearer (SN terminated SCG bearer), or an SN terminated split bearer (SN terminated split bearer).

The MCG bearer may be a bearer related to only an MCG air interface resource. The SCG bearer may be a bearer related to only an SCG air interface resource. The split bearer may be a bearer related to both an MCG air interface resource and an SCG air interface resource, and the split bearer may be split in a PDCP entity. MN or SN termination may mean that a PDCP entity is in an MN or an SN. For example, a PDCP of the MN terminated SCG bearer is in the MN, but an air interface resource corresponding to a bottom layer is in an SCG. The air interface resource may also be referred to as a radio resource, or a radio air interface resource, or has another name.

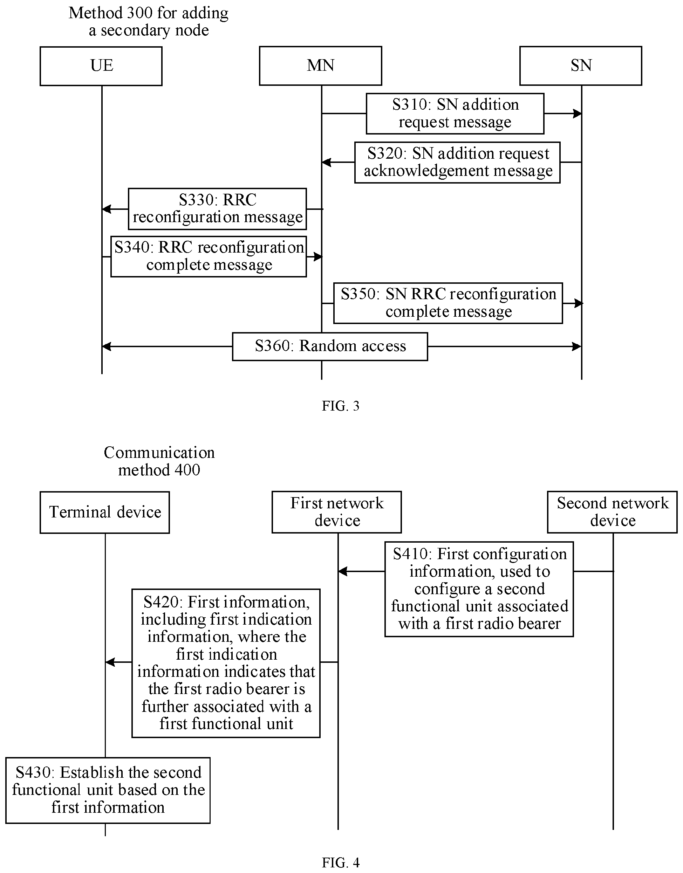

FIG. 3 is a schematic flowchart of a method 300 for secondary node addition. The method 300 is merely used as an example, and does not constitute a limitation on this application. The following describes the method 300 with reference to FIG. 3.

S310: An MN sends an SN addition request (addition request) message to an SN.

The SN addition request message may be used to request the target SN to allocate resources for one or more protocol data unit (protocol data unit, PDU) sessions or quality of service (quality of service, QoS) flows.

Optionally, the SN addition request message may indicate QoS flow characteristics, for example, a QoS flow level, a QoS parameter, a PDU session level, transport network layer (transport network layer, TNL) address information, and network slice information of a PDU session level. Optionally, the MN further provides a measurement result of a UE, in the SN addition request message, for the SN to select and configure an SCG cell. Optionally, for a radio bearer that needs an SCG air interface resource, the MN further indicates information needed for the SCG, for example, a UE capability.

S320: The SN sends an addition request acknowledgement (addition request acknowledgement) message to the MN.

Optionally, before S320, the method 300 further includes: The SN allows a request of the MN; the SN allocates a corresponding air interface resource; and the SN determines a radio bearer configuration based on a bearer type in the SN addition request message.

Optionally, the addition request acknowledgement message may include the radio bearer configuration. The radio bearer configuration may be sent to the UE via the MN.

S330: The MN sends an RRC reconfiguration (reconfiguration) message to the UE.

The RRC reconfiguration message may include an RRC configuration of the SN. The RRC configuration may be used by the UE to access the SN and obtain the air interface resource of the SN.

S340: The UE sends an RRC reconfiguration complete message to the MN.

The RRC reconfiguration complete message may indicate that configuration is completed, and the RRC reconfiguration complete message may include an RRC reconfiguration complete message for the SN.

Optionally, before S340, the method 300 further includes: The UE performs configuration based on the RRC reconfiguration message.

S350: The MN sends the RRC reconfiguration complete message for the SN to the SN.

The RRC reconfiguration complete message for the SN may indicate to the SN that the UE has completed the dual connectivity configuration.

S360: The UE performs random access based on the RRC configuration of the SN, and establishes an air interface connection to the SN.

It should be noted that, for an SN terminated radio bearer, a PDCP entity needs to be switched from the MN to the SN. Because a key corresponding to the PDCP entity changes, the PDCP entity needs to be re-established to avoid key confusion. For an SN terminated MCG bearer or an SN terminated split bearer, an RLC bearer that is originally established on the MCG also needs to be re-established or a logical channel needs to be changed, to avoid incorrect transfer of data encrypted by using an old key.

In a related technical solution, after receiving the RRC reconfiguration message, the UE stops uplink data transmission with the MN, and performs re-establishment of the PDCP entity corresponding to the radio bearer, including: clearing all buffered data, initializing a processing parameter related to the PDCP entity, and applying a new parameter to perform encryption and integrity protection. After accessing the SN (that is, S360), the UE performs uplink or downlink data transmission with the SN. From receiving the RRC reconfiguration message by the UE to accessing the SN by the UE, the UE cannot transmit data of the radio bearer. Consequently, a transmission rate drop occurs, that is, a transmission rate suddenly decreases, thereby reducing user experience.

Therefore, how to avoid a rate decrease during the re-establishment of the protocol entity by the terminal device is an urgent problem to be resolved.

FIG. 4 is a schematic flowchart of a communication method 400 according to an embodiment of this application. According to the method 400, the rate decrease during the re-establishment of the protocol entity by the terminal device can be avoided. The following describes the method 400 with reference to FIG. 4.

S410: A first network device receives first configuration information from a second network device. Correspondingly, the second network device sends the first configuration information to the first network device.

Optionally, the first configuration information may be used to configure a second functional unit associated with a first radio bearer. Optionally, the first network device and the second network device may provide a service for a terminal device. In other words, the first network device and the second network device may be connected to the terminal device. In other words, the first network device and the second network device may establish a dual connection to the terminal device, in other words, the terminal device may access one or more cells of the first network device and the second network device.

A functional unit may include a function of a PDCP entity. In some optional embodiments, the functional unit may be replaced with a PDCP, a PDCP entity, or a PDCP protocol stack. The functional unit may have another name, for example, a function.

A first functional unit may be an original (or a configured) functional unit of the first radio bearer. In some optional embodiments, the first functional unit may be replaced with a first PDCP, a first PDCP function, a first PDCP entity, or a first PDCP protocol stack. The first functional unit may have another name, for example, a first function.

The second functional unit may be a functional unit that needs to be newly configured for the first radio bearer. In some optional embodiments, the second functional unit may be replaced with a second PDCP, a second PDCP function, a second PDCP entity, or a second PDCP protocol stack. The second functional unit may have another name, for example, a second function.

Optionally, the first functional unit and the second functional unit may represent different functions on one PDCP entity. Optionally, the first functional unit may represent a function of one PDCP entity, and the second functional unit may represent a function of another PDCP entity.

For example, the first network device is an MN, and the second network device is an SN. The first configuration information may be carried in an SN addition request acknowledgement message. However, this is not limited in this application, and the first configuration information may alternatively be carried in another message.

Optionally, before S410, the method 400 further includes: The first network device sends, to the second network device, a message used to request to add the second network device, for example, an SN addition request message. For specific content of the SN addition request message, refer to the related descriptions in S310. Details are not described herein again. Optionally, the second network device determines the first configuration information based on the SN addition request message.

In some optional embodiments, the SN addition request message may include a type of a radio bearer. Optionally, the second network device may determine the first configuration information. Optionally, the second network device may determine the first configuration information based on the type of the radio bearer.

In some optional embodiments, the first configuration information may be used to trigger the terminal device to access (or add) the second network device, so that the terminal device can communicate with the second network device. In some optional embodiments, the first configuration information may be used to configure an RLC bearer associated with the second functional unit. The RLC bearer may be an RLC bearer corresponding to the second network device. For example, the first configuration information may indicate the terminal device to configure the RLC bearer of the first second network device associated with the second functional unit.

In some optional embodiments, the first configuration information may include at least one of configuration information of the first radio bearer, PDCP configuration information, or an SCG configuration. For example, the SCG configuration may include a cell resource configuration of the SN. For example, the SCG configuration may indicate the terminal device to add one or more cells of the second network device. In other words, the SCG configuration may indicate the terminal device to add a group of cells of the second network device, where the group of cells includes one or more cells. The PDCP configuration information in the first configuration information may also be referred to as a configuration (or configuration information) of the second functional unit. For example, the configuration of the second functional unit may include at least one of an encryption parameter, an integrity protection parameter, or a robust header compression (robust header compression, ROHC) parameter.

For example, the second functional unit associated with the first radio bearer may process data of the first radio bearer. The second functional unit associated with the first radio bearer may also be expressed as a second functional unit corresponding to the first radio bearer, a second functional unit of the first radio bearer, or the like.

It should be noted that a name of the functional unit is not limited in this application. The functional unit may be referred to as a PDCP, a protocol stack, a PDCP protocol stack, a PDCP entity, a function, or a PDCP function, or has another name. A name of the RLC bearer is not limited in this application. The RLC bearer may be referred to as an RLC, an RLC entity, an RLC function, a bearer, or a logical channel, or has another name.

S420: The first network device sends first information to the terminal device.

The first information may include first indication information. The first indication information may indicate that the first radio bearer is associated with the first functional unit. Optionally, the first information includes the first configuration information.

That the first indication information may indicate that the first radio bearer is associated with the first functional unit means that the first indication information may indicate to configure a dual active protocol stack (dual active protocol stack, DAPS) for the first radio bearer, or indicate to configure functions of two sets of protocol stacks for the first radio bearer. In other words, the first indication information may indicate the terminal device to maintain the first functional unit and establish the second functional unit, in other words, the first indication information may indicate the terminal device to wait for a release indication of the first functional unit and establish the second functional unit, in other words, the first indication information may indicate the terminal device not to release the first functional unit, and establish the second functional unit.

Configuring the dual active protocol stack for the first radio bearer may mean that the first radio bearer maintains an original protocol stack in an activated state, and configures a new activated protocol stack.

The first functional unit may be a configured functional unit. For example, the first functional unit may be a functional unit configured before S420 is performed. The first functional unit may be associated with a first bearer (or referred to as a first RLC bearer). The first bearer may be associated with an air interface resource of one or more cells of the first network device. The air interface resource of the one or more cells of the first network device may be referred to as an air interface resource corresponding to the first bearer, or an air interface resource associated with the first functional unit, or has another name.

The first indication information may be from the second network device. To be specific, the second network device sends the first indication information to the first network device, and the first network device receives the indication information from the second network device. Optionally, the first indication information may be carried in first configuration information. The second network device may add the first indication information to the first configuration information, and send the first configuration information to the first network device. Alternatively, the first indication information may be generated by the first network device. In other words, the first indication information may be independent of the first configuration information. The first network device may add the first indication information to the first information, and send the first information to the terminal device. A source of the first indication information is not limited in this application.

The first indication information may be referred to as a dual active protocol stack indication, or a dual active indication, or has another name. This is not limited in this application.

The first information may indicate to add the second network device. The first information may indicate the terminal device to add the second network device. For example, the first information may indicate the terminal device to add the second network device as the SN. Optionally, the first information may indicate, via explicit indication information, the terminal device to add the second network device. Optionally, the first configuration information may indicate the terminal device to add the second network device. Optionally, the first indication information may indicate the terminal device to add the second network device.

Optionally, the first information may indicate the terminal device to add one or more cells of the second network device. In other words, the first information may indicate the terminal device to add a group of cells of the second network device, where the group of cells includes one or more cells. Optionally, the first network device receives third configuration information from the second network device, where the third configuration information indicates the terminal device to add one or more cells of the second network device. The third configuration information may be referred to as an SCG configuration or has another name. Optionally, the first configuration information includes the third configuration information. In addition, that the one or more cells of the second network device are associated with the indicated second functional unit may be understood as that the second functional unit is configured to process data associated with the one or more cells of the second network device.

Optionally, the first information may indicate the terminal device to add one or more cells of the first network device.

Optionally, the first information may indicate that the one or more cells of the first network device are associated with the second functional unit. It may be understood as that the second functional unit is configured to process data associated with the one or more cells of the first network device. Optionally, the first information indicates a configuration of a second bearer, where the second bearer is a bearer of the first network device, and the second bearer is associated with the second functional unit. The configuration of the second bearer may be used to configure the second bearer. The configuration of the second bearer may be used to configure an air interface resource of the one or more cells of the first network device. The air interface resource of the one or more cells of the first network device may be referred to as an air interface resource corresponding to the second bearer. The air interface resource corresponding to the second bearer may be used as an air interface resource associated with the second functional unit.

The second bearer may also be referred to as a second RLC bearer or has another name. Optionally, the first network device may send the configuration of the second bearer to the terminal device. The configuration of the second bearer may be in the first information, or may be sent independently of the first information. This is not limited in this application.

Optionally, the first information may indicate a configuration of a third bearer, where the third bearer is a bearer of the second network device, and the third bearer is associated with the second functional unit. The configuration of the third bearer may be used to configure the third bearer. The configuration of the third bearer may be used to configure an air interface resource of one or more cells of the second network device. The air interface resource of the one or more cells of the second network device may be referred to as an air interface resource corresponding to the third bearer. The air interface resource corresponding to the third bearer may be used as an air interface resource associated with the second functional unit.

It may be understood that the air interface resource associated with the second functional unit may include the air interface resource corresponding to the second bearer and the air interface resource corresponding to the third bearer.

The third bearer may also be referred to as a third RLC bearer or has another name. Optionally, the first network device may send the configuration of the third bearer to the terminal device. The configuration of the third bearer may be in the first information, or may be sent independently of the first information. This is not limited in this application.

When the first network device or the second network device determines to configure the first radio bearer as a split bearer, the configuration of the second bearer may be determined by the first network device, and the configuration of the third bearer may be determined by the second network device. Optionally, the first network device receives the configuration of the third bearer from the second network device. Optionally, the first configuration information includes the configuration of the third bearer. Optionally, the first indication information includes the configuration of the third bearer.

The first information may be referred to as RRC reconfiguration information or has another name. This is not limited in this application.

In some optional embodiments, the first information may be carried in an RRC reconfiguration message. However, this is not limited in this application, and the first information may be carried in another message. In some optional embodiments, S420 may be replaced with the following: The first network device sends the first configuration information to the terminal device; and the first network device sends the first indication information to the terminal device. In other words, the first configuration information and the first indication information may be carried in different messages, in other words, the first configuration information and the first indication information may be separately sent.

The first functional unit may be configured to process data corresponding to the first network device, and the second functional unit may be configured to process data corresponding to the second network device.

That the first functional unit may be configured to process the data corresponding to the first network device means that the first functional unit may correspond to (or may be associated with) the first network device, in other words, the first functional unit may be configured to process to-be-sent data of the first radio bearer or data of the first radio bearer from the first network device, in other words, the first functional unit may be configured to process to-be-sent data of the first radio bearer or data of the first radio bearer from a third entity (for example, a PDCP entity), where the third entity corresponds to the first network device. That the third entity corresponds to the first network device may be understood as that the third entity is associated with the first network device, or may be understood as that the third entity is located or configured on a first network device side.

That the second functional unit may be configured to process the data corresponding to the second network device means that the second functional unit may correspond to (or may be associated with) the second network device, in other words, the second functional unit may be configured to process to-be-sent data of the first radio bearer or data of the first radio bearer from the second network device, in other words, the second functional unit may be configured to process to-be-sent data of the first radio bearer or data of the first radio bearer from a fourth entity (for example, a PDCP entity), where the fourth entity corresponds to the second network device. That the fourth entity corresponds to the second network device may be understood as that the fourth entity is associated with the second network device, or may be understood as that the fourth entity is located or configured on a second network device side.

In a possible manner, the third entity and the fourth entity are PDCP entities, the first functional unit and the second functional unit are PDCP entities or PDCP functional units, and the third entity and the fourth entity are associated with the first radio bearer. When the first network device or the second network device determines to configure the first radio bearer as a split bearer, the first network device configures an RLC bearer on the first network device side for the first radio bearer, and associates the RLC bearer with the second functional unit; and the second network device configures an RLC bearer on the second network device side for the first radio bearer, and associates the RLC bearer with the second functional unit. Correspondingly, the terminal device may receive, on the air interface resources of the first network device and the second network device, the data from the fourth entity, and deliver the data to the second functional unit for processing.

It may be understood that, the first radio bearer is associated with the first functional unit and the second functional unit, indicating that both the first functional unit and the second functional unit may process the data of the first radio bearer. In other words, both the data corresponding to the first network device and the data corresponding to the second network device may be processed by the terminal device configured with the first functional unit and the second functional unit. For example, the terminal device may process data from a PDCP of the first network device, or may process data from a PDCP of the second network device. For another example, the first functional unit may process data from a PDCP of the first network device, and the second functional unit may process data from a PDCP of the second network device.

In some optional embodiments, the terminal device may uniformly number the data processed by the first functional unit and the second functional unit. Operations such as encryption, integrity protection, ROHC, and packet header addition are performed on the data processed by the first functional unit by using the configuration of the first functional unit, and operations such as encryption, integrity protection, ROHC, and packet header addition are performed on the data processed by the second functional unit by using the configuration of the second functional unit. The data processed by the first functional unit is sent on the air interface resource associated with the first functional unit, and the data processed by the second functional unit is sent on the air interface resource associated with the second functional unit. The air interface resource is associated with the first functional unit. It should be noted that the air interface resource associated with the second functional unit may be an air interface resource of the first network device, or may be an air interface resource of the second network device.

In some optional embodiments, the terminal device may receive the data from the first network device and the data from the second network device respectively. The received data includes the data delivered by the PDCP of the first network device and the data delivered by the PDCP of the second network device. The terminal device may receive the data on the air interface resources associated with the first network device and the second network device, and determine whether the received data is from the first network device or the second network device. For example, the terminal device may distinguish between the data from the first network device and the data from the second network device by using an RLC bearer identifier or a logical channel identifier, to deliver, to the first functional unit for processing, the data from the PDCP of the first network device, and deliver, to the second functional unit for processing, the data from the PDCP of the second network device.

The first functional unit and the second functional unit may correspond to a same PDCP entity. However, this is not limited in this application. The first functional unit and the second functional unit may correspond to different PDCP entities. For example, the first functional unit corresponds to a first PDCP entity, and the second functional unit corresponds to a second PDCP entity. It may be understood that functions of the first functional unit and the second functional unit may be implemented in a same PDCP entity, or may be implemented in different PDCP entities. In a possible implementation, the first functional unit corresponds to a PDCP function. Optionally, the terminal device has only one PDCP entity, where the PDCP entity corresponds to two functions: the first functional unit and the second functional unit. In another possible implementation, the first functional unit corresponds to a PDCP entity. Optionally, the terminal device establishes a PDCP entity corresponding to the second functional unit. In this case, after the new PDCP entity is established, the terminal device has two PDCP entities, where one PDCP entity corresponds to the first functional unit, and the other PDCP entity corresponds to the second functional unit.

Optionally, the first information includes second configuration information. The second configuration information may be configuration information added by the first network device. Optionally, the first configuration information and the second configuration information may be carried in RRC configuration information. The RRC configuration information may include at least one of the configuration information of the first radio bearer, the PDCP configuration information, or configuration information of an air interface resource associated with the first radio bearer. Optionally, the PDCP configuration information may include at least one of an encryption parameter, an integrity protection parameter, or an RHCO parameter. The PDCP configuration information in the RRC configuration information or the second configuration information may be referred to as a configuration (or configuration information) of the second functional unit. Optionally, the configuration information of the air interface resource associated with the first radio bearer may include at least one of an MCG configuration or an SCG configuration. For example, the configuration information of the air interface resource associated with the first radio bearer, which is a split bearer, may include the MCG configuration and the SCG configuration. The SCG configuration may indicate the terminal device to add one or more cells of the second network device. In other words, the SCG configuration may indicate the terminal device to add a group of cells of the second network device, where the group of cells includes one or more cells. For another example, the configuration information of the air interface resource associated with the first radio bearer, which is an MCG bearer, may include an RLC bearer configuration on the first network device side. For another example, the configuration information of the air interface resource associated with the first radio bearer, which is an SCG bearer, may include an RLC bearer configuration on the second network device side.

S430: The terminal device establishes the second functional unit based on the first information.

Optionally, the method 400 further includes: The terminal device adds the second network device based on the first information. Optionally, S430 may be replaced with the following: The terminal device establishes the second functional unit based on the first information, and adds the second network device.

Establishing the second functional unit may also be referred to as configuring the second functional unit. Optionally, the terminal device maintains the first functional unit and establishes the second functional unit based on the first indication information. Optionally, the terminal device waits for a release indication of the first functional unit based on the first indication information. Optionally, the terminal device does not release the first functional unit based on the first indication information. Optionally, before releasing the first functional unit, the terminal device establishes the second functional unit based on the first indication information.

Optionally, the first indication information may be carried in the first configuration information. Optionally, the terminal device maintains the first functional unit and establishes the second functional unit based on the first configuration information. Optionally, the terminal device waits for a release indication of the first functional unit based on the first configuration information. Optionally, the terminal device does not release the first functional unit based on the first configuration information. Optionally, before releasing the first functional unit, the terminal device establishes the second functional unit based on the first configuration information.

Optionally, the terminal device adds the second network device based on the first information. For example, the terminal device adds, based on the first information, the second network device to provide a communication service for the terminal device. Optionally, the first configuration information indicates to add the second network device, and the terminal device adds the second network device based on the first configuration information. For example, the terminal device adds, based on the first configuration information, the second network device as the SN (or to provide a communication service for the terminal device).

Optionally, the first information indicates the terminal device to add one or more cells of the second network device. Optionally, the terminal device adds one or more cells of the second network device or adds a group of cells of the second network device based on the first information, where the group of cells includes one or more cells.

Optionally, the first information includes third configuration information, where the third configuration information indicates the terminal device to add one or more cells of the second network device. The third configuration information may be referred to as an SCG configuration or has another name. Optionally, the terminal device adds one or more cells of the second network device, or adds a group of cells of the second network device based on the third configuration information, where the group of cells includes one or more cells. Optionally, the first configuration information includes third configuration information. In addition, that the one or more cells of the second network device are associated with the second functional unit may be understood as that the second functional unit is configured to process data associated with the one or more cells of the second network device.

Optionally, the first information may indicate the terminal device to add one or more cells of the first network device. Optionally, the terminal device adds the one or more cells of the first network device based on the first information.

Optionally, the first information indicates a configuration of a second bearer. Optionally, the terminal device configures the second bearer based on the configuration of the second bearer, where the second bearer is a bearer of the first network device, and the second bearer is associated with the second functional unit. Optionally, the terminal device configures an air interface resource of the one or more cells of the first network device based on the configuration of the second bearer. The air interface resource of the one or more cells of the first network device may be referred to as an air interface resource corresponding to the second bearer. The air interface resource corresponding to the second bearer may be used as an air interface resource associated with the second functional unit.

The second bearer may also be referred to as a second RLC bearer or has another name. Optionally, the terminal device receives the configuration of the second bearer. The configuration of the second bearer may be in the first information, or may be sent independently of the first information. This is not limited in this application.

Optionally, the first information may indicate a configuration of a third bearer. Optionally, the terminal device configures the third bearer based on the configuration of the third bearer, where the third bearer is a bearer of the second network device, and the third bearer is associated with the second functional unit. Optionally, the terminal device configures an air interface resource of one or more cells of the second network device based on the configuration of the third bearer. The air interface resource of the one or more cells of the second network device may be referred to as an air interface resource corresponding to the third bearer. The air interface resource corresponding to the third bearer may be used as an air interface resource associated with the second functional unit.

The third bearer may also be referred to as a third RLC bearer or has another name. Optionally, the terminal device receives the configuration of the third bearer. The configuration of the third bearer may be in the first information, or may be sent independently of the first information. This is not limited in this application.

Optionally, the first information includes second configuration information. The first configuration information and the second configuration information are carried in RRC configuration information. Optionally, based on the RRC configuration information, the terminal device establishes the second functional unit and adds the second network device. Optionally, the terminal device configures, based on the RRC configuration information, at least one of the first radio bearer, a PDCP, or an air interface resource associated with the first radio bearer.

Optionally, the terminal device establishes, based on the first information, an entity corresponding to the second functional unit. For example, the terminal device may establish a new PDCP entity. Optionally, the terminal device establishes, based on the first information, a function corresponding to the second functional unit. For example, the terminal device may reconfigure an original PDCP entity, to establish the function corresponding to the second functional unit.

According to the foregoing embodiment, during the process of adding a secondary node, the terminal device may retain an original functional unit without releasing it, and configure a new functional unit. Both the original functional unit and the new functional unit can perform data transmission, thereby maintaining data transmission over a radio bearer and avoiding a rate decrease during re-establishment of protocol entities by the terminal device. In this way, user experience is improved.

Optionally, data corresponding to the first bearer, the second bearer, and the third bearer is data of the first radio bearer. The first bearer, the second bearer, and the third bearer may be used to process the data of the first radio bearer.

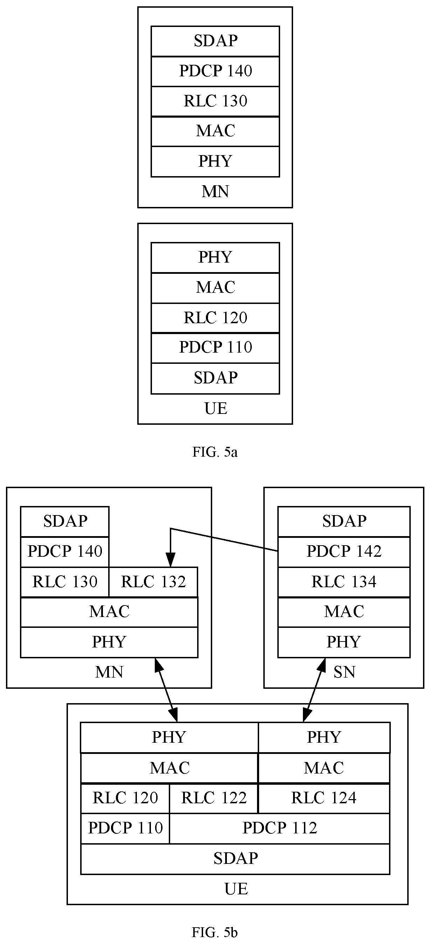

The term "bearer" may also be referred to as an RLC bearer, or a logical channel, or has another name. The following uses FIG. 5a and FIG. 5b as examples to describe the foregoing solution.

FIG. 5a and FIG. 5b are diagrams of protocol stack configurations according to an embodiment of this application. FIG. 5a and FIG. 5b are merely examples shown for ease of understanding the method 400, and do not constitute a limitation on this application.

As shown in FIG. 5a, before an SN is added (for example, before the method 400 is performed), a UE is connected to an MN. A PDCP 110 in the UE corresponds to a PDCP 140 in the MN. In uplink transmission, the UE may deliver data processed by the PDCP 110 to an RLC 120 for processing, and then send the data to the MN. After the MN receives the data, the data may be processed by an RLC 130 and then delivered to the PDCP 140 for processing. For example, the PDCP 110 may be referred to as a first functional unit.

As shown in FIG. 5b, after an SN is added (for example, after S420 is performed), a UE is connected to an MN and the SN. The UE maintains an original PDCP 110, and establishes a new PDCP 112, where the PDCP 112 may be configured to process data corresponding to a PDCP 142. Optionally, the UE may establish an RLC 122 and an RLC 124 associated with the PDCP 112. The MN may establish an RLC 132 associated with PDCP 142 in the SN. The SN may establish the PDCP 142 and establish an RLC 134 associated with the PDCP 142. For example, a first bearer may be an RLC 120, a second bearer may be the RLC 122, and a third bearer may be the RLC 124. For example, a PDCP 114 may be referred to as a second functional unit. For example, the PDCP 112 may be referred to as a second functional unit. For example, the PDCP 112 and the PDCP 114 may be referred to as second functional units.

It should be noted that the PDCP 110 and the PDCP 112 may be different PDCP entities, or may be a same PDCP entity. For a case in which the PDCP 110 and the PDCP 112 may be the same PDCP entity, a UE side does not need to establish a new PDCP entity, but only needs to reconfigure different functional units in an original PDCP.

In some optional embodiments, the terminal device may uniformly number data processed by the PDCP 110 and the PDCP 112. Optionally, the terminal device applies different configurations to perform operations such as encryption, integrity protection, ROHC, and packet header addition for the PDCP 110 and the PDCP 112. For example, the operations such as encryption, integrity protection, ROHC, and packet header addition are performed on the data of the PDCP 110 by using a configuration of the PDCP 110 provided by the MN, and the operations such as encryption, integrity protection, ROHC, and packet header addition are performed on the data processed by the PDCP 112 by using a configuration of the PDCP 112 provided by the SN. The data processed by the PDCP 110 is sent on an air interface resource associated with the PDCP 110. For example, the data processed by the PDCP 110 is delivered to the RLC 120 associated with the PDCP 110 for processing. The data processed by the PDCP 112 is sent on an air interface resource associated with the PDCP 112. For example, the data processed by the PDCP 112 is delivered to the RLC 122 or the RLC 124 associated with the PDCP 112 for processing.

In some optional embodiments, the terminal device may receive data from a first network device and a second network device. The received data includes data delivered by the PDCP 140 of the first network device and data delivered by the PDCP 142 of the second network device. The terminal device may receive the data on the air interface resources that are in the first network device and the second network device and that are associated with the PDCP 140 and the PDCP 142, and determine whether the received data is from the first network device or the second network device. For example, different RLCs correspond to different logical channels. The terminal device may distinguish, by using a logical channel identifier, whether the data is from an RLC entity (for example, an RLC 130) associated with the PDCP 140 or an RLC entity (for example, the RLC 132 or the RLC 134) associated with the PDCP 142, and determine whether the data is from the PDCP 140 of the first network device or the PDCP 142 of the second network device, to deliver the data from the PDCP 140 of the first network device to the PDCP 110 for processing, and deliver the data from the PDCP 140 of the second network device to the PDCP 112 for processing.

In some optional embodiments of this application, after S410, the first network device may maintain downlink transmission. In other words, the first network device may send data to the terminal device. Optionally, the first network device may deliver the downlink data to the second network device through an inter-station interface. Optionally, the first network device may send a status report, and the status report may indicate a status of the downlink data that has been successfully transmitted on a first network device side by the terminal device. The second network device may clear, based on the status report, the downlink data that has been successfully transmitted by the terminal device on the first network device side. For example, the status report may indicate a sequence number (sequence number) of a next downlink PDCP. A name of the status report is not limited in this application, and the status report may also have another name.

In some optional embodiments of this application, after S410, the terminal device may maintain uplink transmission with the first network device. In other words, the terminal device may send data to the first network device. Optionally, the first network device may send the uplink data to a core network element. Optionally, the first network device may deliver the uplink data to the second network device through an inter-station interface. Optionally, the first network device may send a status report, and the status report may indicate a status of the uplink data that has been successfully transmitted on a first network device side by the terminal device. The second network device may clear, based on the status report, the uplink data that has been successfully transmitted by the terminal device on the first network device side. For example, the status report may indicate a sequence number corresponding to a 1^{st} lost packet in the uplink data. A name of the status report is not limited in this application, and the status report may also have another name.

In some optional embodiments, after S420, the method 400 further includes: The terminal device sends a reconfiguration complete message to the first network device. The reconfiguration complete message may indicate that a configuration of the terminal device takes effect, or that the terminal device has been configured with a second functional unit. Optionally, the reconfiguration complete message may indicate that the terminal device has been configured with an RLC bearer associated with the second functional unit. A name of the reconfiguration complete message is not limited in this application, and the reconfiguration complete message may also have another name.

In some optional embodiments, the reconfiguration complete message may carry an SN RRC reconfiguration complete message, and the first network device may send the SN RRC reconfiguration complete message to the second network device. In some other optional embodiments, the terminal device may send an SN RRC reconfiguration complete message to the second network device. The SN RRC reconfiguration complete message indicates that a configuration of the terminal device takes effect, or that the terminal device has been configured with a second functional unit. Optionally, the SN RRC reconfiguration complete message may indicate that the terminal device has been configured with an RLC bearer associated with the second functional unit. A name of the SN RRC reconfiguration complete message is not limited in this application, and the SN RRC reconfiguration complete message may also have another name. The SN RRC reconfiguration complete message may be sent by the first network device to the second network device through the inter-station interface.

In some optional embodiments, the terminal device may send an RRC reconfiguration complete message to the second network device. For example, direct sending of an SRB message may be supported between the terminal device and the second network device.

Optionally, in some other implementation scenarios of the foregoing embodiment, the method 400 further includes: The first network device receives second information, where the second information may indicate that the terminal device has successfully added the second network device.

In an optional implementation, the second network device may send the second information to the first network device. In another optional implementation, the terminal device may send the second information to the first network device.

The second network device may perform random access with the terminal device. In some optional embodiments, after receiving the SN RRC reconfiguration complete message, the second network device may perform random access with the terminal device. However, this is not limited in this application. For example, the second network device or the terminal device may directly initiate the random access.

That the second information may indicate that the terminal device has successfully added the second network device means that the second information may indicate that the terminal device adds the second network device, in other words, the second information may indicate that the terminal device successfully accesses the second network device, in other words, the second information may indicate that the terminal device accesses the second network device.

It should be noted that, in a related technical solution, the MN stops downlink transmission over a corresponding radio bearer after sending the RRC reconfiguration message, and the terminal device stops uplink transmission over the corresponding radio bearer after receiving the RRC reconfiguration message. After accessing the SN, the terminal device restores the uplink and downlink transmission over the corresponding radio bearer. Therefore, in the related technical solution, the MN does not need to learn whether the terminal device has successfully added the SN. However, in this application, after sending first information, the first network device still performs downlink transmission with the terminal device. Therefore, the first network device needs to learn of a status of adding the SN by the terminal device, to perform corresponding processing.

Optionally, in some other implementation scenarios of the foregoing embodiment, the method 400 further includes: The first network device stops sending data of a first radio bearer to the terminal device, in other words, the first network device stops downlink transmission over a first radio bearer with the terminal device. Optionally, after receiving the second information, the first network device stops sending the data of the first radio bearer to the terminal device. Optionally, after receiving the second information, the first network device stops uplink scheduling (or the uplink transmission) over the first radio bearer of the terminal device. Optionally, after sending the second information, the second network device sends the data of the first radio bearer to the terminal device. Optionally, after receiving the second information from the terminal device, the first network device sends indication information to the second network device, where the indication information indicates the second network device to perform downlink transmission over the first radio bearer or send the data of the first radio bearer to the terminal device. Optionally, the second network device performs downlink transmission over the first radio bearer or sends the data of the first radio bearer to the terminal device based on the indication information. A name of the indication information is not limited in this application, and the indication information may also have another name.

According to the foregoing embodiment, when determining that the terminal device adds the second network device, the first network device may stop sending the data of the first radio bearer to the terminal device. Because the terminal device has successfully added the second network device, the second network device may perform downlink transmission over the first radio bearer with the terminal device. In the foregoing embodiment, the terminal device maintains the downlink transmission in a protocol entity re-establishment process, thereby avoiding a rate decrease.

Optionally, in some other implementation scenarios of the foregoing embodiment, the method 400 further includes: The terminal device stops sending the data of the first radio bearer to the first network device, or the terminal device stops the uplink transmission over the first radio bearer with the first network device. Optionally, after the terminal device has successfully added the second network device, the terminal device stops sending the data of the first radio bearer to the first network device. Optionally, after the terminal device has successfully added the second network device, the second network device receives the data of the first radio bearer from the terminal device, or the second network device starts uplink scheduling (or uplink transmission) over the first radio bearer of the terminal device. Optionally, the second network device may perform unified deduplication and reordering processing on an uplink PDCP PDU delivered by the first network device and an uplink PDCP PDU sent by the terminal device, and deliver the uplink PDCP PDUs to the core network element. Optionally, the second network device may send the data of the first radio bearer to the core network element through an NG-U tunnel. Optionally, an SN addition request received by the second network device from the first network device may include information about an uplink NG-U tunnel, and the second network device may send the data of the first radio bearer to the core network element based on the information about the uplink NG-U tunnel.

Optionally, in some other implementation scenarios of the foregoing embodiment, the method 400 further includes: The first network device sends the data of the first radio bearer to the core network element; and/or the first network device sends the data of the first radio bearer to the second network device. Correspondingly, the second network device receives the data of the first radio bearer from the first network device.

Optionally, the data that is of the first radio bearer and that is sent by the first network device to the core network element may be PDCP PDUs with consecutive sequence numbers. Optionally, the data that is of the first radio bearer and that is sent by the first network device to the second network device may be uplink PDCP PDUs with inconsecutive sequence numbers. Optionally, the second network device may send the received data of the first radio bearer to the core network element.

Optionally, the data that is of the first radio bearer and that is sent by the first network device to the second network device may be downlink data. Optionally, the second network device may send the received data of the first radio bearer to the terminal device.

Optionally, the first network device may send the data of the first radio bearer to the second network device through the inter-station interface.

According to the foregoing embodiment, the first network device may deliver the data of the first radio bearer to the second network device, so that the second network device can perform uplink and downlink data transmission, thereby improving continuity of the data transmission.

Optionally, the first network device may send a PDU session modification indication to the core network element, for example, an access and mobility management function (access and mobility management function, AMF) network element, where the PDU session modification indication may indicate the AMF to modify the NG-U tunnel of the first radio bearer from the first network device side to a second network device side. The PDU session modification indication may also have another name. Optionally, the AMF network element may send a bearer modification (bearer modification) indication to the core network element, for example, a user plane function (user plane function, UPF) network element, where the bearer modification indication may indicate the UPF network element to establish an NG-U tunnel corresponding to the first radio bearer, and the NG-U tunnel is used for data transmission between the UPF and the second network device. Optionally, the UPF network element may send an end marker (end marker) to the first network device, where the end marker indicates that downlink data transmission over the first radio bearer between the UPF and the first network device is completed. Optionally, after the UPF network element sends the end marker, the UPF may send downlink data of the first radio bearer to the second network device. Optionally, the AMF network element may send indication information to the first network device, to indicate that PDU session modification is completed. The indication information may also have another name.

Optionally, the first network device may perform at least one of releasing an inter-station tunnel between the first network device and the second network device, releasing an uplink NG-U tunnel between the first network device and the core network element, or releasing a downlink NG-U tunnel between the first network device and the core network element. Optionally, the first network device may perform the release action in response to the indication information indicating that the PDU session modification is completed. In other words, the first network device may perform the release action after receiving the indication information indicating that the PDU session modification is completed.

Optionally, in some other implementation scenarios of the foregoing embodiment, the method 400 further includes: The first network device sends third information to the terminal device, where the third information indicates the terminal device to release the first functional unit.

In some optional embodiments, the third information indicates the terminal device to release an RLC bearer associated with the first functional unit. In some other optional embodiments, information indicating the terminal device to release the first functional unit may be different from information indicating the terminal device to release the RLC bearer associated with the first functional unit.

Optionally, the third information may be 1-bit indication information. In an example, the third information may indicate all radio bearers for which a dual active protocol stack is configured to release a resource of an original protocol stack. In another example, the third information may include or carry an identifier of a radio bearer. In other words, the first network device may indicate some radio bearers for which a dual active protocol stack is configured to release a resource of an original protocol stack. Optionally, the identifier of the radio bearer may not be carried in the third information. In other words, the first network device may send the third information and the identifier of the radio bearer.

Optionally, in some other implementation scenarios of the foregoing embodiment, the method 400 further includes: The second network device sends the third information to the terminal device. In other words, the second network device may indicate the terminal device to release the first functional unit. Optionally, the second network device receives indication information from the first network device, where the indication information indicates the second network device to release the first functional unit of the terminal device. Optionally, the second network device sends the third information to the terminal device in response to the indication information or after receiving the indication information. The indication information may have another name.

Optionally, the second network device may send the third information via the first network device. For example, the second network device sends indication information to the first network device, where the indication information indicates the first network device to release the first functional unit of the terminal device. Optionally, the first network device sends the third information to the terminal device in response to the indication information or after receiving the indication information.

Optionally, in some other implementation scenarios of the foregoing embodiment, the method 400 further includes: The first network device receives fourth information, where the fourth information indicates at least one of the following: modification of a protocol data unit session is completed, the terminal device has delivered all data of the first functional unit, or the terminal device requests to release the first functional unit.

Information indicating that the modification of the protocol data unit session is completed may be from the core network element. Information indicating that the terminal device has delivered all the data of the first functional unit, or information indicating that the terminal device requests to release the first functional unit may be from the terminal device.

Optionally, that the first network device sends the third information to the terminal device includes: The first network device sends the third information to the terminal device in response to the fourth information or after receiving the fourth information.

In a possible case, uplink data to be delivered to the first network device may be buffered on an MCG resource associated with the first functional unit. Optionally, after delivering the uplink data of the first functional unit, the terminal device sends the fourth information to the first network device.

Names of the third information and the fourth information are not limited in this application, and the third information and the fourth information may also have another name.

Optionally, the first network device sends indication information to the second network device, where the indication information indicates that the terminal device has released the first functional unit. The indication information may have another name.

Optionally, in some other implementation scenarios of the foregoing embodiment, the method 400 further includes: The terminal device releases the first functional unit based on the third information. In other words, when receiving the third information, the terminal device releases the first functional unit. In other words, after receiving the third information, the terminal device releases the first functional unit. Optionally, the terminal device releases the RLC bearer associated with the first functional unit.

Optionally, in some other implementation scenarios of the foregoing embodiment, the method 400 further includes: The first network device sends fifth information to the second network device, where the fifth information indicates the second network device to configure the first radio bearer to be associated with the first functional unit and the second functional unit.

That the first network device sends the fifth information to the second network device may be understood as that the first network device indicates the second network device to configure a dual active protocol stack for the first radio bearer. Optionally, the first network device may indicate which radio bearer is configured with the dual active protocol stack.

Optionally, the first network device indicates to associate the second functional unit with an air interface resource of the first network device and/or an air interface resource of the second network device, that is, indicates a bearer type of the first radio bearer. For example, the first network device indicates to configure the first radio bearer as a split bearer, in other words, associate the second functional unit with the air interface resource of the first network device and/or the air interface resource of the second network device.

Optionally, the fifth information includes capability information of the terminal device. For example, the capability information of the terminal device may indicate that a capability of the terminal device supports a dual active protocol stack.

Optionally, the first network device determines to configure the first radio bearer to be associated with the first functional unit and the second functional unit, and the first network device sends the fifth information to the second network device. In other words, the first network device may determine to configure the dual active protocol stack for the first radio bearer. Optionally, the first network device may determine, based on the capability of the terminal device, to configure the first radio bearer to be associated with the first functional unit and the second functional unit. For example, when the capability of the terminal device supports the dual active protocol stack, the first network device determines to configure the first radio bearer to be associated with the first functional unit and the second functional unit. For another example, when the capability of the terminal device does not support the dual active protocol stack, the first network device determines not to configure the first radio bearer to be associated with the first functional unit and the second functional unit.

The fifth information may be carried in an SN addition request message. However, this is not limited in this application, and the fifth information may be carried in another message. A name of the fifth information is not limited in this application, and the fifth information may also have another name.

In some optional embodiments, the first network device may send the SN addition request message to the second network device, where the SN addition request message includes an addition indication, and the addition indication indicates the second network device to add the first radio bearer. Optionally, the addition indication indicates that a functional unit of the first radio bearer is on the second network device side. In other words, the first radio bearer corresponds to, is associated with, or is terminated at the second network device. Optionally, the SN addition request message includes the fifth information.

Optionally, in some other implementation scenarios of the foregoing embodiment, the method 400 further includes: The first network device receives sixth information from the second network device, where the sixth information indicates that the second network device determines to configure the first radio bearer to be associated with the first functional unit and the second functional unit. Correspondingly, the second network device sends the sixth information to the first network device.

That the second network device sends the sixth information to the first network device may be understood as that the second network device indicates that the second network device agrees to configure the dual active protocol stack for the first radio bearer. In other words, for the fifth information sent by the first network device, the second network device may agree, via the sixth information, to configure the dual active protocol stack for the first radio bearer.

Optionally, the fifth information includes the capability information of the terminal device. For example, the capability information of the terminal device may indicate that the capability of the terminal device supports the dual active protocol stack. Optionally, the second network device determines, based on the capability information of the terminal device, whether to agree to configure the dual active protocol stack for the first radio bearer. For example, when the capability of the terminal device supports the dual active protocol stack, the second network device agrees to configure the dual active protocol stack for the first radio bearer. For another example, when the capability of the terminal device does not support the dual active protocol stack, the second network device does not agree to configure the dual active protocol stack for the first radio bearer.

In some other optional embodiments, the second network device sends indication information, indicating to determine not to configure the first radio bearer to be associated with the first functional unit and the second functional unit. In other words, the second network device indicates that the second network device does not agree to configure the dual active protocol stack for the first radio bearer. The indication information may also have another name. This is not limited in this application.

The sixth information may be carried in an SN addition response message. However, this is not limited in this application, and the sixth information may be carried in another message.

Optionally, the second network device determines to configure the first radio bearer to be associated with the first functional unit and the second functional unit, and the second network device sends the sixth information to the first network device. In other words, the second network device may determine whether to agree to configure the dual active protocol stack for the first radio bearer.

Optionally, in some other implementation scenarios of the foregoing embodiment, the method 400 further includes: The first network device receives second indication information from the second network device, where the second indication information indicates the first network device to configure the first radio bearer to be associated with the first functional unit and the second functional unit.

The second indication information may be carried in the SN addition response message. However, this is not limited in this application, and the second indication information may be carried in another message.

Optionally, the second network device determines to configure the first radio bearer to be associated with the first functional unit and the second functional unit, and the second network device sends the second indication information to the first network device. In other words, the second network device may determine to configure the dual active protocol stack for the first radio bearer.

Optionally, the first network device sends the SN addition request message to the second network device, where the SN addition request message is used to request to establish the first radio bearer on the second network device side. Optionally, the SN addition request message may include the capability information of the terminal device. For example, the capability information of the terminal device may indicate that the capability of the terminal device supports the dual active protocol stack. Optionally, the second network device determines, based on the capability information of the terminal device, whether to configure the dual active protocol stack for the first radio bearer. For example, when the capability of the terminal device supports the dual active protocol stack, the second network device determines to configure the dual active protocol stack for the first radio bearer. For another example, when the capability of the terminal device does not support the dual active protocol stack, the second network device determines not to configure the dual active protocol stack for the first radio bearer. Optionally, the second network device determines, based on at least one of the type of the first radio bearer or a QoS requirement, whether to configure the dual active protocol stack for the first radio bearer.

Optionally, during establishment of the inter-station interface between the first network device and the second network device, the first network device sends capability information of the first network device to the second network device, and receives capability information of the second network device. During the establishment of the inter-station interface between the second network device and the first network device, the second network device sends the capability information of the second network device to the first network device, and receives the capability information of the first network device. The capability information of the first network device may indicate whether the first network device can configure the first radio bearer to be associated with the first functional unit and the second functional unit. The capability information of the second network device may indicate whether the second network device can configure the first radio bearer to be associated with the first functional unit and the second functional unit.

In other words, the first network device and the second network device may obtain base station capability information through negotiation in advance, to learn whether the first network device or the second network device supports configuring the dual active protocol stack.

Optionally, in some other implementation scenarios of the foregoing embodiment, the first information includes third indication information, where the third indication information indicates that first configuration information is preconfiguration information. Optionally, the first configuration information corresponds to the second network device.

That the first configuration information may be the preconfiguration information means that the first configuration information may temporarily not take effect, in other words, the first configuration information may be to-be-activated configuration information, in other words, the first configuration information may be inactivated configuration information.

Optionally, the third indication information may be added by the first network device. Optionally, the third indication information may be added by the second network device. A source of the third indication information is not limited in this application. Optionally, the first configuration information may include the third indication information. Optionally, the second network device sends indication information to the first network device, where the indication information indicates to the first network device that the first configuration information is the preconfiguration information.

A name of the third indication information is not limited in this application, and the third indication information may have another name.

The message carried in the first information may be referred to as a preconfiguration message, or an RRC preconfiguration message, or has another name. In some optional embodiments, the third indication information may not be in the first information. In other words, the third indication information and the first configuration information are separately sent.

Optionally, the first network device sends the fifth information to the second network device, where the fifth information is used to request the second network device to preconfigure the first radio bearer to be associated with the first functional unit and the second functional unit. Optionally, the second network device determines, for the first network device, to preconfigure the first radio bearer to be associated with the first functional unit and the second functional unit, and the first network device sends the fifth information to the second network device.

That the first network device sends the fifth information to the second network device may be understood as that the first network device indicates the second network device to preconfigure the dual active protocol stack for the first radio bearer. Optionally, the first network device may indicate which radio bearer is preconfigured with the dual active protocol stack. Optionally, the fifth information includes the capability information of the terminal device. For example, the capability information of the terminal device may indicate that the capability of the terminal device supports the dual active protocol stack.

Optionally, the first network device determines to preconfigure the first radio bearer to be associated with the first functional unit and the second functional unit, and the first network device sends the fifth information to the second network device. In other words, the first network device may determine to preconfigure the dual active protocol stack for the first radio bearer. Optionally, the first network device may determine, based on the capability of the terminal device, to preconfigure the first radio bearer to be associated with the first functional unit and the second functional unit. For example, when the capability of the terminal device supports the dual active protocol stack, the first network device determines to preconfigure the first radio bearer to be associated with the first functional unit and the second functional unit. For another example, when the capability of the terminal device does not support the dual active protocol stack, the first network device determines not to preconfigure the first radio bearer to be associated with the first functional unit and the second functional unit.

Optionally, the fifth information includes information for requesting the second network device to preconfigure the first radio bearer to be associated with the first functional unit and the second functional unit. Optionally, the information for requesting the second network device to preconfigure the first radio bearer to be associated with the first functional unit and the second functional unit may be independent of the fifth information. For example, the first network device may send, to the second network device, a first configuration including the information for requesting the second network device to preconfigure the first radio bearer to be associated with the first functional unit and the second functional unit.

Optionally, the sixth information indicates that it is determined to preconfigure the first radio bearer to be associated with the first functional unit and the second functional unit. Optionally, the second network device determines to preconfigure the first radio bearer to be associated with the first functional unit and the second functional unit, and the second network device sends the sixth information to the first network device.

That the second network device sends the sixth information to the first network device may be understood as that the second network device indicates that the second network device agrees to preconfigure the dual active protocol stack for the first radio bearer. In other words, for the fifth information sent by the first network device, the second network device may agree, via the sixth information, to preconfigure the dual active protocol stack for the first radio bearer.

Optionally, the sixth information includes information indicating that it is determined to preconfigure the first radio bearer to be associated with the first functional unit and the second functional unit. Optionally, the information indicating that it is determined to preconfigure the first radio bearer to be associated with the first functional unit and the second functional unit may be independent of the sixth information. For example, the second network device may send, to the first network device, the information indicating that it is determined to preconfigure the first radio bearer to be associated with the first functional unit and the second functional unit.

Optionally, the second indication information indicates the first network device to preconfigure the first radio bearer to be associated with the first functional unit and the second functional unit. Optionally, the second network device determines to preconfigure the first radio bearer to be associated with the first functional unit and the second functional unit, and the second network device sends the second indication information to the first network device.

Optionally, the second indication information includes information indicating to preconfigure the first radio bearer to be associated with the first functional unit and the second functional unit. Optionally, the information indicating to preconfigure the first radio bearer to be associated with the first functional unit and the second functional unit may be independent of the second indication information. For example, the second network device may send, to the first network device, the information indicating to preconfigure the first radio bearer to be associated with the first functional unit and the second functional unit.

Optionally, the first network device generates configuration information of at least one candidate third network device. The second network device in this application is one of the at least one third network device. A difference lies in that the second network device is a finally selected network device. In other words, configuration information (that is, the first information) of the second network device finally takes effect. For example, the at least one candidate third network device may be at least one candidate SN. Optionally, configuration information from each of the at least one third network device includes the first indication information.

Optionally, the first network device determines to perform, for the terminal device, preconfiguration for adding the second network device. Optionally, the first network device determines the at least one third network device based on a measurement report of the terminal device. Optionally, the first network device determines, based on the capability information of the terminal device, whether the first network device can perform, for the terminal device, preconfiguration for adding the second network device. For example, when the capability of the terminal device supports the preconfiguration, the first network device determines to perform, for the terminal device, preconfiguration for adding the second network device. For another example, when the capability of the terminal device does not support the preconfiguration, the first network device determines not to perform, for the terminal device, preconfiguration for adding the second network device.

Optionally, the first network device receives the capability information of the second network device. For example, during establishment of an inter-station connection, the first network device may receive the capability information of the second network device. Optionally, the first network device determines whether the second network device can be used as a candidate base station (or referred to as a target base station) for the preconfiguration for adding the second network device.

Optionally, the SN addition request message includes a preconfiguration request. Optionally, the preconfiguration request includes a radio bearer addition indication.

Optionally, S410 includes: The first network device receives the configuration information from the at least one third network device. The second network device is one of the at least one third network device. Optionally, S420 includes: The first network device sends the configuration information of the at least one third network device to the terminal device. Optionally, the first network device sends third indication information, where the third indication information indicates that at least one set of configuration information is preconfiguration information. Optionally, the first network device sends at least one piece of third indication information, where the at least one piece of third indication information respectively corresponds to the at least one set of configuration information, and the at least one piece of third indication information respectively indicates that the at least one set of configuration information is the preconfiguration information. Optionally, one of the at least one set of configuration information and third indication information corresponding to the configuration information may be carried in one piece of information. Optionally, one or more sets of configuration information in the at least one set of configuration information from the first network device include the first indication information. Optionally, the third indication information includes the first indication information.

Optionally, the terminal device performs preconfiguration based on the at least one set of configuration information. Optionally, the terminal device sends an RRC reconfiguration complete message to the first network device, where the RRC reconfiguration complete message indicates that the terminal device receives the at least one set of configuration information. A name of the RRC reconfiguration complete message is not limited in this application, and the RRC reconfiguration complete message may also have another name.

Optionally, in some other implementation scenarios of the foregoing embodiment, the first configuration information corresponds to information about the second network device, and the method 400 further includes: The first network device sends seventh information to the terminal device, where the seventh information is used to activate a configuration of the first configuration information, and the seventh information includes the information about the second network device.

The first configuration information corresponds to the information about the second network device. Optionally, there is a mapping relationship between the at least one set of configuration information and the at least one candidate third network device. For example, a mapping table includes the at least one set of configuration information and information about the at least one candidate third network device. Optionally, there is a mapping relationship between an identifier of the at least one set of configuration information and the information about the at least one candidate third network device. For example, the mapping table includes the identifier of at least one set of configuration information and the information about the at least one candidate third network device. The identifier of the configuration information corresponds to the configuration information.

The first configuration information corresponds to the information about the second network device. Optionally, the first configuration information includes the information about the second network device. In this way, the first configuration information may be matched based on the information about the second network device. However, this is not limited in this application. The information about the second network device may not be in the first configuration information. In other words, the information about the second network device and the first configuration information may be separately sent.

For example, the information about the second network device may include at least one of identification information of the second network device, number information of the second network device, identification information of a node of the second network device, or identification information of a cell of the second network device.

A name of the seventh information is not limited in this application, and the seventh information may also have another name, for example, an L1 indication or an L2 indication. The seventh information may be lower-layer indication information, for example, a MAC control element (control element, CE). Optionally, the seventh information includes the first indication information.

The seventh information is used to activate the configuration of the first configuration information. In other words, the seventh information is used to activate application of the first configuration information. For example, the seventh information is used to trigger the terminal device to apply the first configuration information. For another example, the seventh information is used to activate or trigger the terminal device to apply the first configuration information (or the preconfiguration information) corresponding to the second network device. It may be understood that the seventh information may indicate which set of preconfiguration is triggered by the terminal device.

Optionally, the first network device may indicate, in the seventh information, the information about the second network device, for example, the at least one of the identification information of the second network device, the number information of the second network device, the identification information of the node of the second network device, or the identification information of the cell of the second network device. The terminal device may determine, based on the information about the second network device, to trigger the configuration information (namely, the first information) of the second network device. Optionally, S430 includes: The terminal device establishes the second functional unit based on the seventh information and the first configuration information. In other words, the seventh information activates the configuration of the first configuration information. Optionally, S430 includes: The terminal device adds the second network device based on the seventh information and the first configuration information. Optionally, S430 includes: The terminal device establishes the second functional unit and adds the second network device based on the seventh information and the first configuration information.

Optionally, the terminal device obtains, through matching based on the information about the second network device, the first configuration information corresponding to the second network device, and the terminal device establishes the second functional unit based on the first configuration information. In other words, the terminal device triggers the first configuration information of the second network device based on the information about the second network device.

It may be understood that the terminal device may apply the corresponding configuration based on an indication of the first network device, to access the second network device (or referred to as a target SN). For a radio bearer (that is, the first radio bearer) for which a dual active protocol stack is configured, an original PDCP (that is, the first functional unit) and an associated bottom-layer configuration (for example, the RLC bearer) are maintained, and a new PDCP (that is, the second functional unit) is established and a corresponding bottom-layer configuration is configured and associated. Optionally, the terminal device may maintain downlink synchronization with the candidate SN in advance based on the preconfiguration information, to reduce duration for accessing the second network device.

Optionally, in some other implementation scenarios of the foregoing embodiment, the method 400 further includes: The first network device receives a first message from the terminal device, where the first message indicates that the terminal device has successfully added the second network device, the first message includes fifth indication information, and the fifth indication information indicates that the terminal device completes a configuration corresponding to the second network device. The first message may be referred to as an RRC reconfiguration complete message or has another name. Optionally, in some other implementation scenarios of the foregoing embodiment, the method 400 further includes: The first network device sends the fifth indication information to the second network device.

Optionally, after receiving the first message, the first network device activates a preconfigured tunnel corresponding to the first network device. The preconfigured tunnel corresponding to the first network device may include at least one of a downlink Xn-U tunnel or an uplink Xn-U tunnel between the first network device and the second network device. Optionally, after receiving the fifth indication information, the second network device activates a preconfigured tunnel corresponding to the second network device. For example, the second network device activates a configuration of an NG-U tunnel between the second network device and the core network element, where the NG-U tunnel is used to send uplink data of the first radio bearer to the core network element.

Optionally, the fifth indication information includes an identifier of the terminal device. It may be understood that when the candidate second network device is preconfigured by a plurality of terminal devices, the second network device can trigger, based on an identifier of the terminal device, a preconfiguration corresponding to the terminal device. Optionally, the identifier of the terminal device may not be in the fifth indication information. In other words, the identifier of the terminal device may be independent of the fifth indication information. Optionally, the first network device sends the identifier of the terminal device to the second network device.

Optionally, the first network device sends the seventh information, and the first network device activates the preconfigured tunnel. In other words, after activating the preconfiguration information, the first network device activates the corresponding preconfigured tunnel.

Optionally, in some other implementation scenarios of the foregoing embodiment, the method 400 further includes: The first network device activates the preconfigured tunnel between the first network device and the second network device.

Optionally, the terminal device sends the fifth indication information to the second network device, and the second network device activates the preconfigured tunnel corresponding to the second network device.

Optionally, the first network device sends fourth indication information to the second network device, where the fourth indication information indicates that the terminal device is to add the second network device based on the first configuration information; and the second network device activates the preconfigured tunnel corresponding to the second network device.

The preconfigured tunnel corresponding to the second network device may alternatively be activated by the first network device. Optionally, in some other implementation scenarios of the foregoing embodiment, the method 400 further includes: The first network device sends eighth information to the core network element, where the eighth information indicates to activate the preconfigured tunnel corresponding to the second network device. Optionally, the preconfigured tunnel corresponding to the second network device is associated with data of the first radio bearer.

Optionally, in some other implementation scenarios of the foregoing embodiment, the method 400 further includes: The first network device sends ninth information to the core network element (for example, the AMF), where the ninth information indicates to release a preconfigured tunnel corresponding to a network device other than the second network device. In other words, after activating the preconfiguration information and the preconfigured tunnel, the first network device may release another preconfigured tunnel, for example, an NG-U tunnel.

In another possible implementation, the first network device alternatively preconfigures a plurality of candidate third network devices for the terminal device. However, the terminal device may actively trigger access to the second network device.

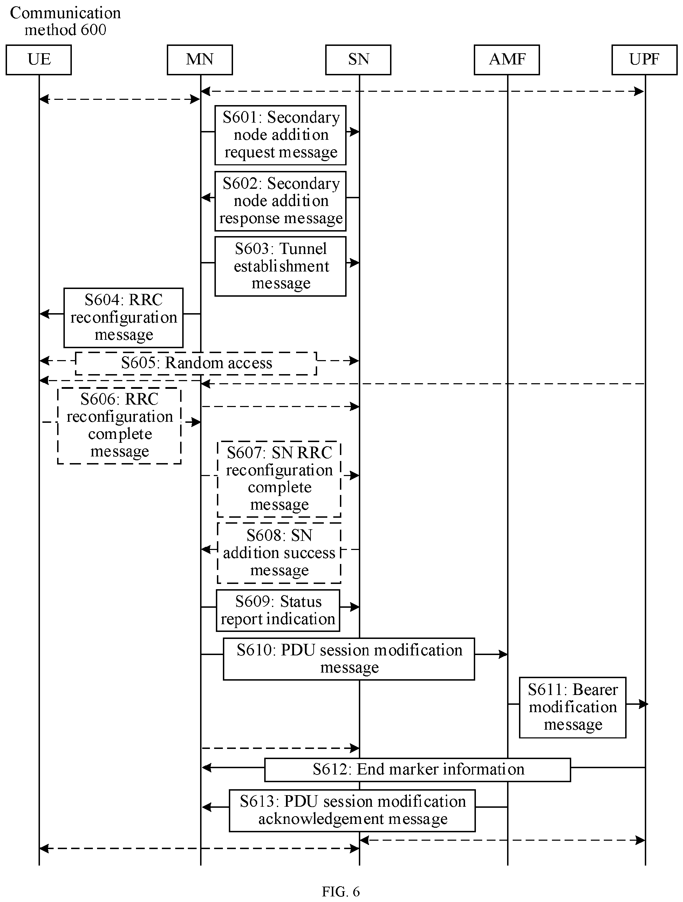

FIG. 6 is a schematic flowchart of another communication method 600 according to an embodiment of this application. The method 600 may be combined with any embodiment of the method 400. For a part that is not described in the method 600, refer to the descriptions in the method 400. Dashed arrows in FIG. 6 may represent data transmission directions. It should be noted that FIG. 6 is merely used as an example, and does not constitute a limitation on this application.

S601: An MN sends a secondary node addition request message to an SN.

S602: The SN sends a secondary node addition response message to the MN.

In S601 and S02, the MN and the SN may determine, through negotiation, whether to support a dual active protocol stack configuration.

In a possible manner, the MN indicates the SN to configure a dual active protocol stack for a corresponding radio bearer (for example, a first radio bearer). For details, refer to the foregoing descriptions of the fifth information and the sixth information. Details are not described herein again.

In another possible manner, the SN determines that the corresponding radio bearer (for example, the first radio bearer) supports the dual active protocol stack configuration. For details, refer to the foregoing descriptions of the second indication information. Details are not described herein again.

Optionally, the MN and the SN obtain base station capability information through negotiation in advance (for example, during establishment of an inter-station interface), to learn whether the SN or the MN supports in configuring the dual active protocol stack.

S603: The MN sends a tunnel establishment message to the SN.

The tunnel establishment message may indicate to establish a tunnel on the inter-station interface. The tunnel may be used for downlink data transmission over an SN terminated MCG bearer or an SN terminated split bearer.

S604: The MN sends an RRC reconfiguration message to a UE.

The RRC reconfiguration message may indicate the UE to perform secondary node addition and configuration. Optionally, the RRC reconfiguration message may include first information. For details, refer to the foregoing descriptions of the first information. Details are not described herein again.

S605: The UE performs random access with the SN.

The UE may be connected to the SN through random access based on an RRC configuration in the RRC reconfiguration message. Optionally, the UE may maintain a connection to the MN. For example, the RRC configuration may include at least one of an SN terminated bearer configuration, an SN PDCP configuration, or a configuration of an air interface resource associated with an SN terminated bearer. For details, refer to descriptions of the first configuration information and the second configuration information. Details are not described herein again.

Based on the foregoing configurations, a UE side maintains two sets of protocol stacks corresponding to a PDCP and processing thereof. For details, refer to the descriptions in FIG. 3 to FIG. 5a and FIG. 5b. Details are not described herein again.

S606: The UE sends an RRC reconfiguration complete message to the MN.

Optionally, the RRC reconfiguration complete message may indicate that configuration is completed, and the RRC reconfiguration complete message may include an SN RRC reconfiguration complete message.

S607: The MN sends an SN reconfiguration complete message to the SN.

The RRC reconfiguration complete message for the SN may indicate to the SN that the UE has completed the dual connectivity configuration.

It should be noted that a sequence of performing S605, S606, and S607 is not limited in this application. For example, an execution sequence may be S606, S607, and S605. For another example, an execution sequence may be S606, S605, and S607.

S608: The SN sends an SN addition success message.

The SN addition success message indicates to the MN that the secondary node has been successfully added. Optionally, the MN stops sending downlink data, and the SN starts to send downlink data to the UE. For descriptions of the SN addition success message, refer to the descriptions of the second information in this application. Details are not described herein.

S608 is an optional step. In some other optional embodiments, S608 may be replaced with: The UE sends an SN addition success message.

S609: The MN sends a status report indication to the SN.

For example, the status report indication may indicate a sequence number of a next downlink PDCP. For another example, the status report indication may indicate a sequence number corresponding to a 1^{st} lost packet in uplink data.

It should be noted that an execution sequence of S609 is not limited in this application. For example, S609 may be performed before S608.

S610: The MN sends a PDU session modification message to an AMF.

The PDU session modification message may indicate the AMF to perform PDU session modification. In other words, the PDU session modification message may indicate an NG-U tunnel of a corresponding bearer to be switched from an MN side to an SN side.

S611: The AMF sends a bearer modification message to a UPF.

The bearer modification message indicates the UPF to establish a corresponding downlink NG-U tunnel, where the downlink NG-U tunnel is used to send downlink data.

S612: The UPF sends end marker (end marker) information to the MN.

Optionally, the UPF sends the end marker information through a downlink NG-U tunnel on the source MN side. The end marker information may indicate that downlink data transmission is completed. Subsequently, the UPF sends downlink data of the radio bearer via the SN. Optionally, S612 includes: The UPF sends the end marker information to the MN when the downlink data transmission is completed.

S613: The AMF sends a PDU session modification acknowledgement message to the MN.

The PDU session modification acknowledgement message may indicate that the PDU session modification is completed.

In a downlink data transmission direction, after sending the RRC reconfiguration message (S604), the MN maintains downlink transmission, and the MN delivers downlink data to the SN through the inter-station interface (established in S603) (this is a data forwarding (data forwarding) procedure indicated by dashed arrows in the figure). Optionally, the MN may send a status report (S609) to indicate that uplink and downlink data that has been successfully transmitted is to be cleared, where the status report indicates a status of the uplink and downlink data that has been successfully received on the MN side by the UE.

In an uplink data transmission processing process, after receiving the secondary station addition configuration (S604), the UE continues to send uplink data to the MN until the SN is successfully accessed (S605). After sending the RRC reconfiguration message (S604), the MN maintains uplink scheduling (that is, maintains uplink transmission), and delivers uplink data to the UPF.

After the UE successfully accesses the SN, the SN may indicate to the MN that the secondary node has been successfully added (S608). The MN stops the uplink scheduling, delivers uplink PDCP PDUs with consecutive sequence numbers to the core network, and delivers uplink PDCP PDUs with inconsecutive sequence numbers to the SN through the inter-station interface (a data delivery procedure indicated by dashed arrows in the figure). The status report in S609 may indicate an uplink direction, to be specific, the sequence number corresponding to the 1^{st} lost packet on the MN side.

Optionally, the secondary node addition request received on the SN side (S601) includes information about an uplink NG-U tunnel. The uplink NG-U tunnel may be used to transmit data of an SN terminated radio bearer to the UPF. After the UE successfully accesses the SN (S605), the SN may start to perform uplink scheduling for the UE. The SN performs unified deduplication and reordering processing on an uplink PDCP PDU delivered by the MN and an uplink PDCP PDU received from the UE, and delivers the uplink PDCP PDUs to the core network.

Optionally, after receiving the PDU session modification acknowledgement message (S613), the MN releases the inter-station tunnel, and releases uplink and downlink NG-U tunnels between the MN and the core network. Optionally, the UE is indicated to release the dual active protocol stack. After the UE side receives a dual active release indication, the UE releases a configuration related to an original protocol stack, releases an original PDCP entity, and releases an RLC entity associated with the original PDCP. Optionally, the MN sends a dual active protocol stack release indication to the SN, to indicate that the UE side has released the dual active protocol stack. Optionally, the SN indicates the UE to release the dual active protocol stack. For example, the SN indicates the UE to release the dual active protocol stack based on the indication of the MN, or the SN may send the dual active protocol stack indication to the UE via the MN. For details, refer to the foregoing descriptions of the third information. Details are not described herein again.

Optionally, uplink data to be delivered to the MN may be buffered on an MCG resource associated with the original PDCP on the UE side. After delivering uplink data on the original protocol stack, the UE sends an end marker (that is, fourth information) to the MN. After receiving the end marker, the MN sends a dual active release indication to the UE based on the end marker. For details, refer to the foregoing descriptions of the fourth information. Details are not described herein again.

Optionally, the MN sends indication information to the SN, to indicate that the UE side has released the dual active protocol stack.

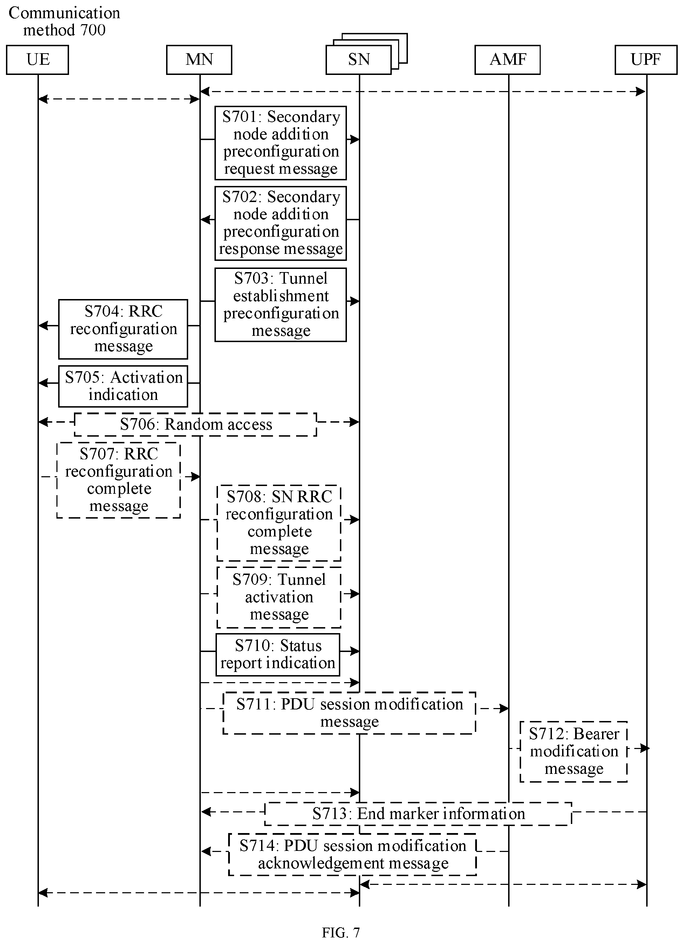

FIG. 7 is a schematic flowchart of still another communication method 700 according to an embodiment of this application. The method 700 may be combined with any embodiment of the method 400. The method 700 is a preconfiguration-related embodiment. For a part that is not described, refer to the descriptions in the method 400. Dashed arrows in FIG. 7 may represent data transmission directions. It should be noted that FIG. 7 is merely used as an example, and does not constitute a limitation on this application.

S701: An MN sends a secondary node addition preconfiguration request message to at least one SN.

The at least one SN may be referred to as a candidate SN. The secondary node addition preconfiguration request message may be used to request the SN to perform preconfiguration for secondary node addition. Optionally, the secondary node addition preconfiguration request message includes a radio bearer addition indication.

Optionally, the MN determines to perform preconfiguration for secondary node addition for a UE. Optionally, the MN determines a target SN that performs preconfiguration based on measurement reporting of the UE. Optionally, the MN determines, based on a capability of the UE, whether preconfiguration for secondary node addition can be performed for the UE. Optionally, the MN learns of capability information of the SN based on previous inter-station interaction, and determines whether the SN can be used as the target SN to perform preconfiguration for secondary node addition.

S702: The SN sends a secondary node addition preconfiguration response message to the MN.

It may be understood that the at least one SN separately sends a secondary node addition preconfiguration response message to the MN. Optionally, the SN generates an RRC preconfiguration on a secondary node side, and sends the RRC preconfiguration to the MN through the secondary node addition preconfiguration response message.

In a possible implementation, the MN determines a dual active protocol stack configured for a radio bearer, which is indicated in the secondary node addition preconfiguration request message in S701. The SN generates a radio bearer configuration based on an indication of the MN, where the corresponding configuration includes a dual active protocol stack configuration indication. Optionally, the SN may determine whether to configure the dual active protocol stack, and indicate the MN. In another possible implementation, the SN determines to configure the dual active protocol stack. For example, the SN determines, based on a radio bearer type or a QoS requirement, to configure the dual active protocol stack for the radio bearer, and indicates the MN.

S703: The MN sends a tunnel establishment preconfiguration message to the at least one SN.

Optionally, the MN indicates a preconfigured downlink Xn-U address to the at least one SN for an SN terminated radio bearer.

S704: The MN sends an RRC reconfiguration message to the UE.

Optionally, the MN generates a configuration of one or more candidate SNs. In other words, the RRC reconfiguration message corresponds to the at least one SN. The RRC reconfiguration message may include the RRC configuration in S702. Optionally, the RRC reconfiguration message may include third indication information, where the third indication information may indicate that the RRC reconfiguration message is a preconfiguration message. For details, refer to the foregoing descriptions of the third indication information. Details are not described herein again.

Optionally, the RRC reconfiguration message includes identification information or number information separately corresponding to the at least one SN, or identification information of a node or identification information of a cell separately corresponding to the at least one SN. Optionally, after receiving the RRC reconfiguration message, the UE returns an RRC reconfiguration complete message to the MN.

S705: The MN sends an activation indication to the UE.

Optionally, the activation indication may include seventh information. For details, refer to the foregoing descriptions of the seventh information. Details are not described herein again.

Optionally, the MN determines to trigger the UE to apply the preconfiguration corresponding to the SN. For example, the MN determines, based on the measurement reporting of the UE, that a trigger condition is met.

S706: The UE performs random access with the SN.

For example, the UE applies the corresponding configuration based on the activation indication of the MN, to access the target SN. In addition, for a radio bearer for which a dual active protocol stack is configured, an original PDCP and an associated bottom-layer configuration are maintained, and a new PDCP entity is established (or a new PDCP function is configured in the original PDCP entity) and a corresponding bottom-layer configuration is configured and associated. Optionally, the UE may maintain downlink synchronization with a candidate SN in advance based on the preconfiguration, to reduce duration for accessing the target SN.

S707: The UE sends an RRC reconfiguration complete message to the MN.

The RRC reconfiguration complete message may indicate that the UE successfully accesses the SN.

S708: The MN sends an SN RRC reconfiguration complete message to the SN.

Optionally, the RRC reconfiguration complete message (S707) sent by the UE to the MN includes the SN RRC reconfiguration complete message. After receiving the RRC reconfiguration complete message, the MN obtains the SN RRC reconfiguration complete message by parsing the RRC reconfiguration complete message, and forwards the SN RRC reconfiguration complete message to the SN.

In another possible implementation, if direct sending of an SRB message is supported between the UE and the SN, the UE may directly send the RRC reconfiguration complete message to the SN. In other words, S708 may be replaced with: The UE sends the SN RRC reconfiguration complete message to the SN.

S709: The MN sends a tunnel activation message to the SN.

The tunnel activation message is used to activate a corresponding Xn-U/NG-U tunnel configuration. Optionally, the tunnel activation message includes an identifier of the UE. It may be understood that, when the candidate SN is preconfigured by a plurality of UEs, the SN can trigger, based on the identifier of the UE, the preconfiguration corresponding to the UE. Optionally, the identifier of the UE may not be in the tunnel activation message. In other words, the identifier of the UE may be independent of the tunnel activation message. Optionally, the MN sends the identifier of the UE to the SN.

Specifically, the MN may activate a configuration of a downlink Xn-U tunnel from the SN to the MN and a configuration of an Xn-U tunnel used for data transfer. Optionally, the SN activates a configuration of an NG-U tunnel between the SN and a core network, to forward uplink data of a radio bearer to the core network. In another possible manner, after S705 or when a condition for performing S705 is met, the MN triggers activation of the corresponding Xn-U tunnel, and indicates the SN to activate the Xn-U tunnel configuration and the configuration of the NG-U tunnel between the MN and the core network. In other words, S709 may be performed before S706 or S705.

Optionally, the MN stops sending downlink data and performing uplink scheduling, and performs data transfer.

S710: The MN sends status indication information to the SN, to indicate an uplink and downlink data transmission status.

Optionally, for S711 to S714, refer to the descriptions in S610 to S613. Details are not described herein again.

S711 to S714 are optional steps, and S711 to S714 may be implemented through preconfiguration. After S701 or S702, the MN may trigger PDU session modification on a core network side, to establish an NG-U tunnel between a UPF and the SN in advance. Optionally, after S606, the MN indicates an AMF, and the AMF indicates the UPF to activate the PDU session to be modified to the target SN. In addition, the MN releases an NG-U tunnel on an MN side. The SN can directly trigger activation of the NG-U tunnel based on a configuration for uplink and downlink data transmission.

Optionally, based on a currently effective configuration of the UE, the MN determines that there is no uplink and downlink data transmission between the UE and a PDCP entity (or a PDCP function) of the MN, and indicates the UE to release a dual active protocol stack. For a solution of indicating the UE to release the dual active protocol stack, refer to the foregoing descriptions of the third information. Details are not described herein again.

Optionally, the MN indicates other candidate SNs to release previous candidate configurations, and indicates the AMF to release the preconfigured NG-U tunnel between the SN and the core network.

Optionally, the MN configures the candidate SN for the UE through preconfiguration. A difference lies in that the UE triggers access to the target SN. In other words, execution of S706 does not depend on S705, and the UE may actively perform S706.

Apparatus embodiments corresponding to the method embodiments of this application are described below. The following briefly describes only apparatuses. For specific implementation steps and details of the solutions, refer to the foregoing method embodiments.

To implement functions in the foregoing method provided in this application, the communication apparatus may include a hardware structure and/or a software module, and the foregoing functions are implemented in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

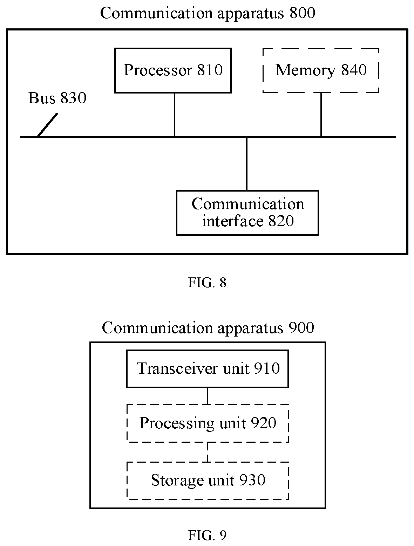

FIG. 8 is a block diagram of a communication apparatus 800 according to an embodiment of this application. The communication apparatus 800 includes a processor 810 and a communication interface 820. The processor 810 and the communication interface 820 may be connected to each other through a bus 830. The communication apparatus 800 may be a first network device, a second network device, or a terminal device.

Optionally, the communication apparatus 800 may further include a memory 840. The memory 840 includes but is not limited to a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM). The memory 840 is configured to store related instructions and data. The memory 840 and the processor 810 may be integrated together or separately disposed.

The processor 810 may be one or more central processing units (central processing units, CPUs). When the processor 810 is one CPU, the CPU may be a single-core CPU, or may be a multi-core CPU. The processor 810 may be a signal processor, a chip, another integrated circuit that can implement the methods in this application, or a part of circuits that are in the foregoing processor, chip, or integrated circuit and that are configured to perform a processing function. In addition, the communication interface 820 may alternatively be an input/output interface. The input/output interface is configured to input or output a signal or data, or may be an input/output circuit.

For example, the communication apparatus 800 is the first network device, and the processor 810 is configured to perform the following operations: receiving first configuration information from a second network device, where the first configuration information is used to configure a second functional unit associated with a first radio bearer, and the first network device and the second network device provide a service for a terminal device; and sending first information to the terminal device, where the first information includes the first configuration information and first indication information, the first information indicates to add the second network device, the first indication information indicates that the first radio bearer is associated with a first functional unit, the first functional unit is configured to process data corresponding to the first network device, and the second functional unit is configured to process data corresponding to the second network device.

For example, the communication apparatus 800 is the terminal device, and the processor 810 is configured to perform the following operations: receiving first information from a first network device, where the first information includes first configuration information and first indication information, the first configuration information is used to configure a second functional unit associated with a first radio bearer, the first information indicates to add a second network device, the first indication information indicates that the first radio bearer is associated with a first functional unit, the first functional unit is configured to process data corresponding to the first network device, the second functional unit is configured to process data corresponding to the second network device, and the first network device and the second network device provide a service for the terminal device; and establishing the second functional unit based on the first information, and adding the second network device.

For example, the communication apparatus 800 is the second network device, and the processor 810 is configured to perform the following operations: sending first configuration information to a first network device, where the first configuration information is used to configure, for a terminal device, a second functional unit associated with a first radio bearer, and the second functional unit is configured to process data corresponding to the second network device; and sending second indication information to the first network device, where the second indication information indicates that the first radio bearer is associated with a first functional unit, the first functional unit is configured to process data corresponding to the first network device, and the first network device and the second network device provide a service for the terminal device.

The foregoing content is merely used as an example for description. The communication apparatus 800 is responsible for performing methods or steps related to the first network device, the terminal device, or the second network device in the foregoing method embodiments.

It may be understood that the communication interface 820 may also be referred to as a transceiver. The transceiver may include a transmitter and a receiver. The transmitter is configured to perform a sending operation, and the receiver is configured to perform a receiving operation. For example, the processor 810 is configured to control the transceiver to receive and/or send a signal.

It should be noted that the communication apparatus 800 may include the transmitter but not include the receiver. Alternatively, the communication apparatus 800 may include the receiver but not include the transmitter. This may specifically depend on whether the foregoing solution performed by the communication apparatus 800 includes a sending action and a receiving action.

The foregoing descriptions are merely examples for description. For specific content, refer to the content shown in the method embodiments. For an implementation of the operations in FIG. 8, refer to the corresponding descriptions of the method embodiments shown in FIG. 3 to FIG. 7.

For example, the communication apparatus 800 may be configured to perform the solutions shown in FIG. 3 to FIG. 7.

For example, the communication apparatus 800 is the first network device, and the communication interface 820 may be configured to: receive the first configuration information from the second network device; and send the first information to the terminal device.

For example, the communication apparatus 800 is the terminal device, and the communication interface 820 may be configured to receive the first information from the first network device.

For example, the communication apparatus 800 is the second network device, and the communication interface 820 may be configured to: send the first configuration information to the first network device; and send the second indication information to the first network device.

For details of other implementations, refer to the detailed descriptions of embodiments shown in FIG. 3 to FIG. 7. Details are not described herein again. It should be understood that a specific process in which the components perform the foregoing corresponding process has been described in detail in the foregoing method embodiments. For brevity, details are not described herein again.

FIG. 9 is a block diagram of another communication apparatus 900 according to an embodiment of this application. The communication apparatus 900 may be a terminal device, a first network device, or a second network device, or may be a chip or a module in the terminal device, the first network device, or the second network device, and is configured to implement the methods in embodiments shown in FIG. 2a to FIG. 2d to FIG. 7. For details, refer to the related descriptions in the foregoing method embodiments.

The communication apparatus 900 includes a transceiver unit 910. The following describes the transceiver unit 910 by using an example.

The transceiver unit 910 may include a sending unit and a receiving unit. The sending unit is configured to perform a sending action of the communication apparatus. The receiving unit is configured to perform a receiving action of the communication apparatus. For ease of description, in this embodiment of this application, the sending unit and the receiving unit are combined into one transceiver unit. This applies throughout and will not be repeated below. The transceiver unit 910 may implement a corresponding communication function. The transceiver unit 910 may also be referred to as a communication interface or a communication module.

It should be noted that the communication apparatus 900 may include the sending unit but not include the receiving unit. Alternatively, the communication apparatus 900 may include the receiving unit but not include the sending unit. This may specifically depend on whether the foregoing solution performed by the communication apparatus 900 includes a sending action and a receiving action.

For example, the transceiver unit 910 is configured to receive first configuration information and the like from the second network device.

Optionally, the communication apparatus 900 may include a processing unit 920, which is configured to perform content related to steps such as processing and coordination of the communication apparatus 900.

For example, the transceiver unit 910 is configured to receive first information and the like from a first network device.

Optionally, the communication apparatus 900 may include a processing unit 920, which is configured to perform content related to steps such as processing and coordination of the communication apparatus 900.

For example, the transceiver unit 910 is configured to send first configuration information and the like to a first network device.

Optionally, the communication apparatus 900 may include a processing unit 920, which is configured to perform content related to steps such as processing and coordination of the communication apparatus 900.

The foregoing content is merely used as an example for description. The communication apparatus 900 is responsible for performing related methods or steps in the foregoing method embodiments.

Optionally, the communication apparatus 900 includes a storage unit 930, and the storage unit 930 is configured to store a program or code used for performing the foregoing methods. In other words, the storage unit 930 may be configured to store instructions and/or data, and the processing unit 920 may read the instructions and/or the data in the storage unit 930, so that the communication apparatus 900 implements the foregoing method embodiments. For example, the communication apparatus 900 may be configured to perform the solutions shown in FIG. 3 to FIG. 7.

For example, the processing unit 920 may be configured to: receive the first configuration information from the second network device, where the first configuration information is used to configure a second functional unit associated with a first radio bearer, and a first network device and the second network device provide a service for a terminal device; and send first information to the terminal device, where the first information includes the first configuration information and first indication information, the first information indicates to add the second network device, the first indication information indicates that the first radio bearer is associated with a first functional unit, the first functional unit is configured to process data corresponding to the first network device, and the second functional unit is configured to process data corresponding to the second network device.

For example, the processing unit 920 may be configured to: receive the first information from the first network device, where the first information includes first configuration information and first indication information, the first configuration information is used to configure a second functional unit associated with a first radio bearer, the first information indicates to add a second network device, the first indication information indicates that the first radio bearer is associated with a first functional unit, the first functional unit is configured to process data corresponding to the first network device, the second functional unit is configured to process data corresponding to the second network device, and the first network device and the second network device provide a service for a terminal device; and establish the second functional unit based on the first information, and add the second network device.

For example, the processing unit 920 may be configured to: send the first configuration information to the first network device, where the first configuration information is used to configure, for a terminal device, a second functional unit associated with a first radio bearer, and the second functional unit is configured to process data corresponding to a second network device; and send second indication information to the first network device, where the second indication information indicates that the first radio bearer is associated with a first functional unit, the first functional unit is configured to process data corresponding to the first network device, and the first network device and the second network device provide a service for the terminal device.

For details of other implementations, refer to the detailed descriptions of embodiments shown in FIG. 3 to FIG. 7. Details are not described herein again. It should be understood that a specific process in which the components perform the foregoing corresponding process has been described in detail in the foregoing method embodiments. For brevity, details are not described herein again.

The apparatus embodiments shown in FIG. 8 and FIG. 9 are used for implementing the content described in FIG. 3 to FIG. 7. For specific execution steps and methods of the apparatuses shown in FIG. 8 and FIG. 9, refer to the content described in the foregoing method embodiments.

This application further provides a communication apparatus, including a processor and a memory. The memory is configured to store instructions, and the processor is configured to invoke and run the instructions stored in the memory, so that the communication apparatus performs the methods in the foregoing embodiments.

This application further provides a chip, including a processor, configured to invoke instructions from a memory and run the instructions stored in the memory, to enable a communication apparatus on which the chip is mounted to perform the methods in the foregoing embodiments.

This application further provides another chip, including an input interface, an output interface, and a processor. The input interface, the output interface, and the processor are connected to each other through an internal connection path. The processor is configured to execute code in a memory. When the code is executed, the processor is configured to perform the methods in the foregoing embodiments. Optionally, the chip further includes the memory. The memory is configured to store a computer program or the code.

This application further provides a processor, configured to be coupled to a memory and configured to perform the method and the function of the communication apparatus in any one of the foregoing embodiments.

Another embodiment of this application provides a computer program product including a computer program or instructions. When the computer program product runs on a computer, the method in the foregoing embodiments is implemented.

This application further provides a computer program. When the computer program is run on a computer, the methods in the foregoing embodiments are implemented.

Another embodiment of this application provides a computer-readable storage medium. The computer-readable storage medium stores a computer program. When the computer program is executed by a computer, the methods in the foregoing embodiments are implemented.

This application further provides a communication system, including a first network device, a second network device, and a terminal device. The first network device, the second network device, and the terminal device are respectively configured to perform steps and functions related to the first network device, the second network device, and the terminal device in embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method is applied to a first network device, and the method comprises:
receiving first configuration information from a second network device, wherein the first configuration information is used to configure a second functional unit associated with a first radio bearer, and the first network device and the second network device provide a service for a terminal device; and
sending first information to the terminal device, wherein the first information comprises the first configuration information and first indication information, the first information indicates to add the second network device, the first indication information indicates that the first radio bearer is further associated with a first functional unit, the first functional unit is used by the terminal device to process data corresponding to the first network device, and the second functional unit is used by the terminal device to process data corresponding to the second network device.

2. The method according to claim 1, wherein the method further comprises:
receiving second information, wherein the second information indicates that the terminal device has successfully added the second network device; and
stopping sending data of the first radio bearer to the terminal device.

3. The method according to claim 1 or 2, wherein the method further comprises:
sending third information to the terminal device, wherein the third information indicates the terminal device to release the first functional unit.

4. The method according to claim 3, wherein the method further comprises:
receiving fourth information, wherein the fourth information indicates at least one of the following: modification of a protocol data unit session is completed, the terminal device has delivered all data of the first functional unit, or the terminal device requests to release the first functional unit.

5. The method according to claim 4, wherein the sending the third information to the terminal device comprises:
sending the third information to the terminal device in response to the fourth information.

6. The method according to any one of claims 1 to 5, wherein the method further comprises:
sending fifth information to the second network device, wherein the fifth information indicates the second network device to configure the first radio bearer to be associated with the first functional unit and the second functional unit.

7. The method according to any one of claims 1 to 5, wherein the method further comprises:
receiving second indication information from the second network device, wherein the second indication information indicates the first network device to configure the first radio bearer to be associated with the first functional unit and the second functional unit.

8. The method according to any one of claims 1 to 7, wherein the first information further comprises third indication information, and the third indication information indicates that the first configuration information is preconfiguration information.

9. The method according to claim 8, wherein the first configuration information corresponds to information about the second network device, and the method further comprises:
sending seventh information to the terminal device, wherein the seventh information is used to activate a configuration of the first configuration information, and the seventh information comprises the information about the second network device.

10. The method according to claim 9, wherein the method further comprises:
sending fourth indication information to the second network device, wherein the fourth indication information indicates that the terminal device is to add the second network device based on the first configuration information.

11. The method according to any one of claims 1 to 10, wherein the method further comprises:
sending eighth information to a core network element, wherein the eighth information indicates to activate a preconfigured tunnel corresponding to the second network device, and the preconfigured tunnel corresponding to the second network device is associated with the data of the first radio bearer.

12. The method according to any one of claims 1 to 11, wherein the first configuration information comprises the first indication information.

13. A communication method, wherein the method is applied to a terminal device, and the method comprises:
receiving first information from a first network device, wherein the first information comprises first configuration information and first indication information, the first configuration information is used to configure a second functional unit associated with the first radio bearer, the first indication information indicates that the first radio bearer is further associated with a first functional unit, the first information indicates to add a second network device, the first functional unit is configured to process data corresponding to the first network device, the second functional unit is configured to process data corresponding to the second network device, and the first network device and the second network device provide a service for the terminal device; and
establishing the second functional unit based on the first information, and adding the second network device.

14. The method according to claim 13, wherein the method further comprises:
receiving third information from the first network device, wherein the third information indicates the terminal device to release the first functional unit; and
releasing the first functional unit based on the third information.

15. The method according to claim 14, wherein the method further comprises:
sending fourth information to the first network device, wherein the fourth information indicates at least one of the following: the terminal device has delivered all data of the first functional unit, or the terminal device requests to release the first functional unit.

16. The method according to any one of claims 13 to 15, wherein the method further comprises:
establishing a second bearer and a third bearer based on the first information, wherein the second functional unit is configured to process data corresponding to the second bearer and the third bearer, the first functional unit is configured to process data corresponding to a first bearer, the first bearer and the second bearer correspond to the first network device, and the third bearer corresponds to the second network device.

17. The method according to any one of claims 13 to 16, wherein the first information further comprises third indication information, the third indication information indicates that the first configuration information is preconfiguration information, and the first indication information is carried in the first configuration information.

18. The method according to claim 17, wherein the first configuration information corresponds to information about the second network device; and
the method further comprises:
receiving seventh information from the first network device, wherein the seventh information comprises the information about the second network device, wherein
the establishing the second functional unit based on the first information comprises:
establishing the second functional unit based on the seventh information and the first configuration information, and adding the second network device.

19. A communication method, wherein the method is applied to a second network device, and the method comprises:
sending first configuration information to a first network device, wherein the first configuration information is used to configure, for a terminal device, a second functional unit associated with a first radio bearer, and the second functional unit is used by the terminal device to process data corresponding to the second network device; and
sending second indication information to the first network device, wherein the second indication information indicates that the first radio bearer is further associated with a first functional unit, the first functional unit is used by the terminal device to process data corresponding to the first network device, and the first network device and the second network device provide a service for the terminal device.

20. The method according to claim 19, wherein the method further comprises:
sending second information to the first network device, wherein the second information indicates that the terminal device has successfully added the second network device.

21. The method according to claim 19 or 20, wherein the method further comprises:
receiving fifth information from the first network device, wherein the fifth information indicates the second network device to configure the first radio bearer to be associated with the first functional unit and the second functional unit.

22. The method according to claim 19 or 20, wherein the method further comprises:
sending the second indication information to the first network device, wherein the second indication information indicates the first network device to configure the first radio bearer to be associated with the first functional unit and the second functional unit.

23. The method according to any one of claims 19 to 22, wherein the method further comprises:
receiving fourth indication information from the first network device, wherein the fourth indication information indicates that the terminal device is to add the second network device based on the first configuration information.

24. A communication apparatus, comprising a processing circuit and an input/output interface, wherein the input/output interface is configured to input and/or output a signal; and the processing circuit is configured to perform the method according to any one of claims 1 to 12, the processing circuit is configured to perform the method according to any one of claims 13 to 18, or the processing circuit is configured to perform the method according to any one of claims 19 to 23.

25. A communication apparatus, comprising a processor and a memory, wherein the memory stores a computer program or instructions, and the processor is configured to execute the computer program or the instructions, to cause the communication apparatus to perform the method according to any one of claims 1 to 12, cause the communication apparatus to perform the method according to any one of claims 13 to 18, or cause the communication apparatus to perform the method according to any one of claims 19 to 23.

26. A computer-readable storage medium, wherein the computer-readable storage medium stores a computer program or instructions; and when the computer program or the instructions are run on a computer, the method according to any one of claims 1 to 12 is performed, the method according to any one of claims 13 to 18 is performed, or the method according to any one of claims 19 to 23 is performed.

27. A computer program product, comprising computer program code, wherein when the computer program code is run, the method according to any one of claims 1 to 12 is implemented, the method according to any one of claims 13 to 18 is implemented, or the method according to any one of claims 19 to 23 is implemented.

28. A communication system, comprising a first network device, a terminal device, and a second network device, wherein the first network device is configured to perform the method according to any one of claims 1 to 12, the terminal device is configured to perform the method according to any one of claims 13 to 18, and the second network device is configured to perform the method according to any one of claims 19 to 23.

29. A chip, comprising a processor, wherein the processor is configured to execute a computer program or instructions, to cause the chip to perform the method according to any one of claims 1 to 12, cause the chip to perform the method according to any one of claims 13 to 18, or cause the chip to perform the method according to any one of claims 19 to 23.
